# EUROPEAN PATENT APPLICATION

(11) **EP 4 746 455 A1**
(43) Date of publication of application: **20.05.2026**
(21) Application number: 24853388.7
(22) Date of filing: 28.06.2024
(51) Int. Cl.: H04W 4/06, H04W 8/24

(54) **COMMUNICATION METHOD AND RELATED DEVICE**

(30) Priority: 14.08.2023 CN 202311020987
(71) Applicant: Huawei Technologies Co., Ltd., Shenzhen, Guangdong 518129 (CN)
(72) Inventor: GE, Cuili, Shenzhen, Guangdong 518129 (CN); LI, Meng, Shenzhen, Guangdong 518129 (CN)
(74) Representative: Pfenning, Meinig & Partner mbB
(86) International application number: PCT/CN2024/102199
(87) International publication number: WO 2025/035973

(57) **Abstract**

This application provides a communication method and a related device, to increase a success rate of a terminal device in receiving multicast data. In addition, a quantity of users served by a multicast session can be increased, and a quantity of multicast session users that can be served in a single cell can be also increased. In the method, a first device determines, based on first information, that a first terminal device prefers to receive multicast data in a first state, where the first state includes a radio resource control (radio resource control, RRC) connected (RRC CONNECTED) state or an RRC inactive (RRC INACTIVE) state; and the first device sends second information to a network device, where the second information indicates that the first terminal device prefers to receive the multicast data in the first state.

## Description

This application claims priority to Chinese Patent Application No. 202311020987.9, filed with the China National Intellectual Property Administration on August 14, 2023 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

In a communication system, different communication devices may communicate with each other in a plurality of manners, for example, broadcast, multicast (multicast), or unicast. The multicast may be a communication technology in which a data copy is sent to a group of specific devices.

Currently, in a multicast communication process, a provider of multicast data (that is, a multicast source) may send a data packet once, so that two or more receivers in a group (or a multicast group, a multicast group, or the like) receive the data packet, to improve utilization of bandwidth resources. Generally, a terminal device may serve as the receiver in the multicast group, and receive the multicast data from the multicast source via a network device.

However, in the multicast communication process, how to increase a success rate of the terminal device in receiving the multicast data is an urgent technical problem to be resolved.

### SUMMARY

This application provides a communication method and a related device, to increase a success rate of a terminal device in receiving multicast data.

A first aspect of this application provides a communication method. The method is performed by a first device, the method is performed by a part of components (for example, a processor, a chip, or a chip system) in the first device, or the method may be implemented by a logical module or software that can implement all or a part of functions of the first device. In the first aspect and possible implementations of the first aspect, an example in which the method is performed by the first device is used for description. In the method, the first device determines, based on first information, that a first terminal device prefers to receive multicast data in a first state, where the first state includes a radio resource control (radio resource control, RRC) connected (RRC CONNECTED) state or an RRC inactive (RRC INACTIVE) state; and the first device sends second information to a network device, where the second information indicates that the first terminal device prefers to receive the multicast data in the first state.

Based on the foregoing solution, after the first device determines, based on the first information, that the first terminal device prefers to receive the multicast data in the first state, the first device sends, to the network device, the second information indicating that the first terminal device prefers to receive the multicast data in the first state, where the first state includes the RRC connected state or the RRC inactive state. The terminal device may be in different connection states, and in the different connection states (for example, the RRC connected state or the RRC inactive state), the terminal device may receive the multicast data in different manners. Therefore, appropriately setting a connection state for the terminal device to receive the multicast data can increase a quantity of users that can be served by a multicast session, and also increase a quantity of multicast session users that can be served in a single cell. In the foregoing solution, the first device can determine the second information based on the first information, and send the second information to the network device. Subsequently, the network device can use the second information as one of bases for scheduling the first terminal device to receive the multicast data, so that the network device can schedule the first terminal device to receive the multicast data in the first state, to increase a success rate of the first terminal device in receiving the multicast data. In addition, a quantity of users served by a multicast session can be increased, and a quantity of multicast session users that can be served in a single cell can be also increased.

It should be understood that the first device may be a server or a logical network element that provides multicast data transmission control (or provides a multicast service). For example, the first device may be a server or a logical network element of an application function (application function, AF) that has a multicast and broadcast capability, an application server (application server, AS), a mission critical service server (for example, a mission critical push to talk server, a mission critical video server, or a mission critical data server) (which may be specifically a server that provides a participating (participating) function in the mission critical service server), or a network resource management middleware server.

It should be understood that, in the foregoing solution, a receiver of the second information sent by the first device may be the network device. The network device may be a network device connected to the first terminal device, or the network device may be a device that provides a network service for the first terminal device. For example, the network device may include an access network device and/or a core network device. For example, the network device includes an access network device and a core network device. In a process in which the first device sends the second information to the network device, the first device may send the second information to the access network device via the core network device, or the first device sends the second information to the core network device. Subsequently, in a process in which the core network device and the access network device establish a multicast session of the first terminal device, the core network device sends a part or all of the second information to the access network device. For example, the network device may be a unified data management (unified data management, UDM) network element or a user data repository (user data repository, UDR) network element in a core network element. In this case, the first device may alternatively send the second information to the UDM network element or the UDR network element via a network exposure function (network exposure function, NEF) network element.

In a possible implementation of the first aspect, the second information further indicates another terminal device in a multicast group to which the first terminal device belongs to receive first multicast data in the first state.

Based on the foregoing solution, the second information further indicates the another terminal device in the multicast group to which the first terminal device belongs to receive the first multicast data in the first state, so that a preference for the first state in which the terminal devices included in the multicast group receive the multicast data can be set in the foregoing solution, to reduce overheads.

Optionally, the second information is carried in multicast and broadcast service assistance information (multicast and broadcast service assistance information, MBS assistance information), or another message/other signaling/other information. This is not limited herein.

Optionally, in the foregoing solution, the second information sent by the first device to the network device may be sent at a multicast session granularity (for example, when the second information is carried in the multicast and broadcast service assistance information). To be specific, the second information may indicate that a terminal device in a multicast session prefers to receive the multicast data in the first state, and the terminal device in the multicast session includes the first terminal device and another terminal device that may exist. In other words, for different multicast sessions in a multicast and broadcast service session list (MBS session list), the different multicast sessions may correspond to different multicast and broadcast service session identifiers (MBS session IDs). The first device may send different second information, to respectively indicate that one or more terminal devices in multicast sessions corresponding to different multicast and broadcast service session identifiers prefer to receive multicast data in the first state.

Optionally, in the foregoing solution, the second information sent by the first device to the network device may include a plurality of pieces of information. The plurality of pieces of information respectively indicate that terminal devices in different multicast sessions prefer to receive the multicast data in the first state. A terminal device in one of the different multicast sessions includes the first terminal device and another terminal device that may exist. In other words, for different multicast sessions in a multicast and broadcast service session list (MBS session list), the different multicast sessions may correspond to different multicast and broadcast service session identifiers (MBS session IDs). The first device may send the second information, and respectively indicate, by using a plurality of pieces of information in the second information, that one or more terminal devices in multicast sessions corresponding to different multicast and broadcast service session identifiers prefer to receive multicast data in the first state. In addition, when the network device includes the core network device and the access network device, after the first device sends the second information including the plurality of pieces of information to the core network device, the core network device may send, to the access network device, parts corresponding to several multicast sessions in the plurality of pieces of information, or the core network device may send all of the plurality of pieces of information to the access network device. This is not limited herein.

It should be noted that, in different connection states, the terminal device may receive the multicast data in different processing manners. For example, when the first terminal device is in the RRC connected state, when receiving the multicast data from a channel indicated by a multicast multicast radio bearer configuration (multicast multicast radio bearer configuration), the first terminal device may provide a hybrid automatic repeat request (hybrid automatic repeat request, HARQ) feedback. If a data packet is lost, the access network device may perform point-to-point (point-to-point, PTP) retransmission. When the first terminal device is in the RRC inactive state, and receives the multicast data from the channel indicated by the multicast multicast radio bearer configuration, the first terminal device may not send the HARQ feedback. If a data packet is lost, processing is performed by a higher layer. Generally, compared with the terminal device in the RRC inactive state, the terminal device in the RRC connected state may have better received quality, and a receiving success rate may be higher.

In a possible implementation of the first aspect, the first information includes at least one of the following:
capability information of the first terminal device, where the capability information indicates that the first terminal device supports receiving the multicast data in the RRC inactive state;
preference information of the first terminal device, where the preference information indicates that the first terminal device prefers to receive the multicast data in the first state;
a multicast role of the first terminal device in a group corresponding to the multicast data;
a location of the first terminal device;
a quantity of multicast groups that the first terminal device joins (joins);
a quantity of multicast sessions that the first terminal device has joined;
received quality information of the first terminal device for a first multicast session, where the first multicast session is used for transmission of the multicast data;
a service communication model of the first terminal device; and
one or more floor request messages from the first terminal device.

Based on the foregoing solution, the first information is used as one of determining bases for the first device to determine that the first terminal device prefers to receive the multicast data in the first state. The first information may be implemented by using the foregoing one or a combination of a plurality of pieces of information, to improve flexibility of implementing the solution.

In addition, because the foregoing one or the combination of the plurality of pieces of information can reflect an actual service status of the first terminal device to some extent, the first state of the first terminal device for receiving the multicast data can be set more accurately based on the one or the combination of the plurality of pieces of information, to avoid setting an inappropriate/unnecessary terminal device to receive the multicast data in the RRC connected state, so as to save transmission resources and improve communication efficiency. Moreover, after such a setting operation, system resources can be fully used, so that overall service experience and user experience of a single terminal device (for example, the first terminal device) are improved.

In a possible implementation of the first aspect, the first information includes the capability information of the first terminal device, and that the first device determines, based on the first information, that the first terminal device prefers to receive the multicast data in the first state includes: When the capability information indicates that the first terminal device supports receiving the multicast data in the RRC inactive state, the first device determines that the first terminal device prefers to receive the multicast data in the RRC inactive state; or when the capability information indicates that the first terminal device does not support receiving the multicast data in the RRC inactive state, the first device determines that the first terminal device prefers to receive the multicast data in the RRC connected state.

Based on the foregoing solution, the first information is used as one of determining bases for the first device to determine that the first terminal device prefers to receive the multicast data in the first state. When the first information includes the capability information of the first terminal device, the first device can determine, based on the capability information, that the first terminal device prefers to receive the multicast data in the RRC inactive state, so that the first state indicated by the second information sent by the first device can adapt to a capability of the first terminal device, and further, the first terminal device can subsequently receive the multicast data in the first state supported by the capability of the first terminal device.

In a possible implementation of the first aspect, the first information includes the preference information of the first terminal device, and that the first device determines, based on the first information, that the first terminal device prefers to receive the multicast data in the first state includes: When the preference information indicates that the first terminal device prefers to receive the multicast data in the RRC connected state, the first device determines that the first terminal device prefers to receive the multicast data in the RRC connected state; or when the preference information indicates that the first terminal device prefers to receive the multicast data in the RRC inactive state, the first device determines that the first terminal device prefers to receive the multicast data in the RRC inactive state.

Based on the foregoing solution, the first information is used as one of determining bases for the first device to determine that the first terminal device prefers to receive the multicast data in the first state. When the first information includes the preference information of the first terminal device, the first device can determine, based on the preference information, that the first terminal device prefers to receive the multicast data in the RRC connected state or the RRC inactive state, so that the first state indicated by the second information sent by the first device can adapt to a preference of the first terminal device, and further, the first terminal device can subsequently receive the multicast data in the first state that meets the preference of the first terminal device.

In a possible implementation of the first aspect, the first information includes the service communication model of the first terminal device, and that the first device determines, based on the first information, that the first terminal device prefers to receive the multicast data in the first state includes: When the service communication model of the first terminal device indicates frequent uplink, the first device determines that the first terminal device prefers to receive the multicast data in the RRC connected state; or when the service communication model of the first terminal device indicates downlink only, the first device determines that the first terminal device prefers to receive the multicast data in the RRC inactive state.

Based on the foregoing solution, the first information is used as one of determining bases for the first device to determine that the first terminal device prefers to receive the multicast data in the first state. When the first information includes the service communication model of the first terminal device, and when the service communication model indicates frequent uplink and a large uplink data transmission amount/high transmission frequency or a large downlink data transmission amount/high transmission frequency, because the terminal device may need to frequently initiate RRC connection resume requests to send uplink data in the RRC inactive state, the first device may determine that the first terminal device prefers to receive the multicast data in the RRC connected state, to reduce power consumption and implementation complexity of the first terminal device. Alternatively, when the service communication model indicates downlink only or uplink only, because the terminal device may still receive downlink-only data in the RRC inactive state, the first device may determine that the first terminal device prefers to receive the multicast data in the RRC inactive state, to reduce power consumption of the first terminal device.

In a possible implementation of the first aspect, the first information includes the one or more floor request messages from the first terminal device, and that the first device determines, based on the first information, that the first terminal device prefers to receive the multicast data in the first state includes: When a total quantity of the one or more floor request messages exceeds a first threshold and/or frequency of the one or more floor request messages exceeds a second threshold, the first device determines that the first terminal device prefers to receive the multicast data in the RRC connected state.

Based on the foregoing solution, the first information is used as one of determining bases for the first device to determine that the first terminal device prefers to receive the multicast data in the first state. When the first information includes the one or more floor request messages from the first terminal device, and when the total quantity of the one or more floor request messages exceeds the first threshold and/or the frequency of the one or more floor request messages exceeds the second threshold, the first terminal device may have a high uplink transmission requirement. In this case, the first device may determine that the first terminal device prefers to receive the multicast data in the RRC connected state, to meet the high uplink transmission requirement of the first terminal device, and reduce power consumption and implementation complexity of the first terminal device.

In a possible implementation of the first aspect, the first information further includes priority information corresponding to at least one of the foregoing information.

Based on the foregoing solution, the first information may further include the priority information corresponding to the at least one of the foregoing information, and the priority information indicates a priority of the at least one of the foregoing information, so that when the first information includes two or more items of the at least one of the foregoing information, the first device can select one of the two or more items as a determining basis based on the priority information, to avoid behavior confusion caused when a conflict exists between the two or more items. In this way, the first device can determine, based on the priority indicated by the priority information, that the first terminal device prefers to receive the multicast data in the first state.

Optionally, the priority information is preconfigured/predefined, or the priority information is from another device (for example, a core network device or a server). This is not limited herein.

In a possible implementation of the first aspect, the multicast data is multicast data of the first multicast session.

Based on the foregoing solution, the multicast data of the first terminal device may be multicast data of a multicast session (for example, the first multicast session), so that the first device can set, for a multicast session granularity, the first state of the terminal device for receiving the multicast data, to increase a success rate of the terminal device in receiving the multicast data in the first multicast session.

In a possible implementation of the first aspect, the capability information and the preference information are from a mission critical service client (mission critical service client, MC service client), and the MC service client is deployed on the first terminal device.

Based on the foregoing solution, when the capability information and the preference information in the first information are from the first terminal device, the capability information and the preference information may be from the MC service client in the first terminal device. Correspondingly, the first device may receive the capability information and the preference information from the MC service client via a mission critical service server (mission critical service server, MC service server), so that the foregoing solution can adapt to a communication scenario of the MC service client and the MC service server.

In a possible implementation of the first aspect, the method further includes: The first device receives a first message from the MC service client, where the first message carries the capability information and/or the preference information, and the first message is a mission critical service registration message, an emergency service registration request message, a user equipment (user equipment, UE) session join notification message, or a multicast and broadcast service session listening status report message.

Based on the foregoing solution, when the capability information and the preference information may be from the MC service client in the first terminal device, the first device may obtain the capability information and/or the preference information by using the first message, and the first message may be implemented by using any one of the foregoing messages, to improve flexibility of implementing the solution.

In a possible implementation of the first aspect, the capability information and/or the preference information are from a network resource management client (network resource management client, NRM client), a service application server (vertical application server, VAS), or a group management server (group management server, GMS), and the NRM client is deployed on the first terminal device.

Based on the foregoing solution, the capability information and/or the preference information received by the first device may be from the NRM client deployed on the first terminal device, the VAS, or the GMS, to provide a plurality of implementations for the first device to obtain the capability information and/or the preference information.

In a possible implementation of the first aspect, the method further includes: The first device receives a second message from the NRM client, where the second message carries the capability information and/or the preference information, and the second message is an NRM registration request message, an emergency service registration request message, a UE session join notification message, or a multicast and broadcast service session listening status report message.

Based on the foregoing solution, when the capability information and the preference information may be from the NRM client in the first terminal device, the first device may obtain the capability information and/or the preference information by using the second message, and the second message may be implemented by using any one of the foregoing messages, to improve flexibility of implementing the solution.

In a possible implementation of the first aspect, the multicast data is multicast data of the first multicast session, and that the first device sends the second information to the network device includes: The first device sends the second information to the network device when at least one of the following is met:
a session identifier of the first multicast session has been determined, and the first multicast session has not been created;
the first multicast session has been created, and the first terminal device has not joined the first multicast session;
the first multicast session has been created, and the first terminal device has joined the first multicast session; and
the first multicast session has been created, the first terminal device has joined the first multicast session, and an association between the first multicast session and the group has been sent to the first terminal device.

Based on the foregoing solution, the multicast data of the first terminal device may be multicast data of a multicast session (for example, the first multicast session), and the first device may trigger sending of the second information based on a plurality of cases of the first multicast session, to improve flexibility of implementing the solution.

Optionally, for the first device, when the first device receives the session identifier of the first multicast session from the network device (for example, the core network device), the first device determines the session identifier of the first multicast session. The session identifier may be a multicast and broadcast service session identifier (MBS session ID), or may have another name. This is not limited herein. For example, this receiving process may be a step in an MBS session ID allocation procedure performed by the first device and the core network device through interaction. The first device sends an MBS session ID request to the core network device, and the core network device allocates the MBS session ID and returns the MBS session ID to the first device, so that the first device can determine the MBS session ID of the first multicast session.

Optionally, for the first device, after the first device sends, to the network device (for example, the core network device), a response message indicating that the first multicast session has been successfully established, the first device determines that the first multicast session has been created. The response message may be a response message indicating that a multicast and broadcast service (multicast and broadcast service, MBS) assistance information session is successfully established. Correspondingly, for the first device, before sending the response message, the first device may determine that the first multicast session has not been created.

Optionally, for the first device, when the first device receives indication information from the network device (for example, the core network device), the first device may determine that the first terminal device has joined the first multicast session. The indication information indicates that the first terminal device and the network device have performed an MBS session join procedure. Correspondingly, before receiving the indication information, the first device may determine that the first terminal device has not joined the first multicast session.

A second aspect of this application provides a communication method. The method is performed by a terminal device, the method is performed by a part of components (for example, a processor, a chip, or a chip system) in the terminal device, or the method may be implemented by a logical module or software that can implement all or a part of functions of the terminal device. In the second aspect and a possible implementation of the second aspect, an example in which the method is performed by a first terminal device is used for description. In the method, the terminal device determines capability information and/or preference information, where the capability information indicates that the first terminal device supports receiving multicast data in a first state, and the preference information indicates that the first terminal device prefers to receive the multicast data in the first state, where the first state includes an RRC connected state or an RRC inactive state; and the terminal device sends the capability information and/or the preference information.

Based on the foregoing solution, the capability information sent by the first terminal device indicates that the first terminal device supports receiving the multicast data in the first state, and/or the preference information sent by the first terminal device indicates that the first terminal device prefers to receive the multicast data in the first state. Then, a receiver (for example, a first device) of the capability information and/or the preference information may send, to a network device based on the capability information and/or the preference information, second information indicating that the first terminal device prefers to receive the multicast data in the first state, where the first state includes the RRC connected state or the RRC inactive state. The terminal device may be in different connection states, and in the different connection states (for example, the RRC connected state or the RRC inactive state), the terminal device may receive the multicast data in different manners. Therefore, appropriately setting a connection state for the terminal device to receive the multicast data can increase a quantity of users served by a multicast session, and also increase a quantity of multicast session users that can be served in a single cell. In the foregoing solution, the first device can determine the second information based on the capability information and/or the preference information sent by the first terminal device, and send the second information to the network device. Subsequently, the network device can use the second information as one of bases for scheduling the first terminal device to receive the multicast data, so that the network device can schedule the first terminal device to receive the multicast data in the first state, to increase a success rate of the first terminal device in receiving the multicast data.

In a possible implementation of the second aspect, the capability information and/or the preference information are/is carried in a mission critical service registration message, an emergency service registration request message, a UE session join notification message, or a multicast and broadcast service session listening status report message.

Based on the foregoing solution, the capability information and/or the preference information sent by the first terminal device may be carried in any one of the foregoing messages, to improve flexibility of implementing the solution.

A third aspect of this application provides a communication method. The method is performed by a network device, the method is performed by a part of components (for example, a processor, a chip, or a chip system) in the network device, or the method may be implemented by a logical module or software that can implement all or a part of functions of the network device. In the first aspect and a possible implementation of the first aspect, an example in which the method is performed by the network device is used for description. In the method, the network device receives second information, where the second information indicates that a first terminal device prefers to receive multicast data in a first state, where the first state includes a radio resource control RRC connected state or an RRC inactive state; and the network device sends the multicast data to the first terminal device based on the second information.

Based on the foregoing solution, the second information received by the network device indicates that the first terminal device prefers to receive the multicast data in the first state. Then, the network device may send the multicast data to the first terminal device based on the second information, where the first state includes the RRC connected state or the RRC inactive state. The terminal device may be in different connection states, and in the different connection states (for example, the RRC connected state or the RRC inactive state), the terminal device may receive the multicast data in different manners. Therefore, appropriately setting a connection state for the terminal device to receive the multicast data can increase a quantity of users served by a multicast session, and also increase a quantity of multicast session users that can be served in a single cell. In the foregoing solution, after the network device receives the second information, the network device can use the second information as one of bases for scheduling the first terminal device to receive the multicast data, so that the network device can schedule the first terminal device to receive the multicast data in the first state, to increase a success rate of the first terminal device in receiving the multicast data.

A fourth aspect of this application provides a communication apparatus. The apparatus is a first device, the apparatus is a part of components (for example, a processor, a chip, or a chip system) in the first device, or the apparatus may be a logical module or software that can implement all or a part of functions of the first device. In the seventh aspect and possible implementations of the seventh aspect, an example in which the communication apparatus is the first device is used for description. The first device may be a terminal device or a network device.

The apparatus includes a processing unit and a transceiver unit. The processing unit is configured to determine, based on first information, that a first terminal device prefers to receive multicast data in a first state, where the first state includes a radio resource control RRC connected state or an RRC inactive state. The transceiver unit is configured to send second information to a network device, where the second information indicates that the first terminal device prefers to receive the multicast data in the first state.

In a possible implementation of the fourth aspect, the first information includes at least one of the following:
capability information of the first terminal device, where the capability information indicates that the first terminal device supports receiving the multicast data in the RRC inactive state;
preference information of the first terminal device, where the preference information indicates that the first terminal device prefers to receive the multicast data in the first state;
a multicast role of the first terminal device in a group corresponding to the multicast data;
a location of the first terminal device;
a quantity of multicast groups that the first terminal device joins;
a quantity of multicast sessions that the first terminal device has joined;
received quality information of the first terminal device for a first multicast session, where the first multicast session is used for transmission of the multicast data;
a service communication model of the first terminal device; and
one or more floor request messages from the first terminal device.

In a possible implementation of the fourth aspect, the first information includes the capability information of the first terminal device, and that the processing unit determines, based on the first information, that the first terminal device prefers to receive the multicast data in the first state includes: When the capability information indicates that the first terminal device supports receiving the multicast data in the RRC inactive state, the processing unit determines that the first terminal device prefers to receive the multicast data in the RRC inactive state; or when the capability information indicates that the first terminal device does not support receiving the multicast data in the RRC inactive state, the processing unit determines that the first terminal device prefers to receive the multicast data in the RRC connected state.

In a possible implementation of the fourth aspect, the first information includes the preference information of the first terminal device, and that the processing unit determines, based on the first information, that the first terminal device prefers to receive the multicast data in the first state includes: When the preference information indicates that the first terminal device prefers to receive the multicast data in the RRC connected state, the processing unit determines that the first terminal device prefers to receive the multicast data in the RRC connected state; or when the preference information indicates that the first terminal device prefers to receive the multicast data in the RRC inactive state, the processing unit determines that the first terminal device prefers to receive the multicast data in the RRC inactive state.

In a possible implementation of the fourth aspect, the first information includes the service communication model of the first terminal device, and that the processing unit determines, based on the first information, that the first terminal device prefers to receive the multicast data in the first state includes: When the service communication model of the first terminal device indicates frequent uplink, the processing unit determines that the first terminal device prefers to receive the multicast data in the RRC connected state; or when the service communication model of the first terminal device indicates downlink only, the first device determines that the first terminal device prefers to receive the multicast data in the RRC inactive state.

In a possible implementation of the fourth aspect, the first information includes the one or more floor request messages from the first terminal device, and that the processing unit determines, based on the first information, that the first terminal device prefers to receive the multicast data in the first state includes: When a total quantity of the one or more floor request messages exceeds a first threshold and/or frequency of the one or more floor request messages exceeds a second threshold, the processing unit determines that the first terminal device prefers to receive the multicast data in the RRC connected state.

In a possible implementation of the fourth aspect, the multicast data is multicast data of the first multicast session.

In a possible implementation of the fourth aspect, the capability information and the preference information are from a mission critical service client MC service client, and the MC service client is deployed on the first terminal device.

In a possible implementation of the fourth aspect, the transceiver unit is further configured to receive a first message from the MC service client, where the first message carries the capability information and/or the preference information, and the first message is a mission critical service registration message, an emergency service registration request message, a UE session join notification message, or a multicast and broadcast service session listening status report message.

In a possible implementation of the fourth aspect, the capability information and/or the preference information are/is from a network resource management client NRM client, a VAS, or a GMS, and the NRM client is deployed on the first terminal device.

In a possible implementation of the fourth aspect, the transceiver unit is further configured to receive a second message from the NRM client, where the second message carries the capability information and/or the preference information, and the second message is an NRM registration request message, an emergency service registration request message, a UE session join notification message, or a multicast and broadcast service session listening status report message.

In a possible implementation of the fourth aspect, the multicast data is multicast data of the first multicast session, and that the transceiver unit is configured to send the second information to the network device includes: The transceiver unit is configured to send the second information to the network device when at least one of the following is met:
a session identifier of the first multicast session has been determined, and the first multicast session has not been created;
the first multicast session has been created, and the first terminal device has not joined the first multicast session;
the first multicast session has been created, and the first terminal device has joined the first multicast session; and
the first multicast session has been created, the first terminal device has joined the first multicast session, and an association between the first multicast session and the group has been sent to the first terminal device.

In a possible implementation of the fourth aspect, the second information further indicates another terminal device in a multicast group to which the first terminal device belongs to receive first multicast data in the first state.

In a possible implementation of the fourth aspect, the second information is carried in multicast and broadcast service assistance information MBS assistance information.

In the fourth aspect of this application, a module constituting the communication apparatus may be further configured to: perform the steps performed in the possible implementations of the first aspect, and achieve corresponding technical effects. For details, refer to the first aspect. Details are not described herein again.

A fifth aspect of this application provides a communication apparatus. The apparatus is a terminal device, the apparatus is a part of components (for example, a processor, a chip, or a chip system) in the terminal device, or the apparatus may be a logical module or software that can implement all or a part of functions of the terminal device. In the fifth aspect and a possible implementation of the fifth aspect, an example in which the communication apparatus is the terminal device is used for description.

The apparatus includes a processing unit and a transceiver unit. The processing unit is configured to determine capability information and/or preference information, where the capability information indicates that the first terminal device supports receiving multicast data in a first state, and the preference information indicates that the first terminal device prefers to receive the multicast data in the first state, where the first state includes a radio resource control RRC connected state or an RRC inactive state. The transceiver unit is configured to send the capability information and/or the preference information.

In a possible implementation of the fifth aspect, the capability information and/or the preference information are/is carried in a mission critical service registration message, an emergency service registration request message, a UE session join notification message, or a multicast and broadcast service session listening status report message.

In the fifth aspect of this application, a module constituting the communication apparatus may be further configured to: perform the steps performed in the possible implementation of the second aspect, and achieve corresponding technical effects. For details, refer to the second aspect. Details are not described herein again.

A sixth aspect of this application provides a communication apparatus. The apparatus is a network device, the apparatus is a part of components (for example, a processor, a chip, or a chip system) in the network device, or the apparatus may be a logical module or software that can implement all or a part of functions of the network device. In the sixth aspect and a possible implementation of the sixth aspect, an example in which the communication apparatus is the network device is used for description.

The apparatus includes a processing unit and a transceiver unit. The transceiver unit is configured to receive second information. The processing unit is configured to determine, based on the second information, that a first terminal device prefers to receive multicast data in a first state, where the first state includes a radio resource control RRC connected state or an RRC inactive state. The transceiver unit is further configured to send the multicast data to the first terminal device based on the second information.

In the sixth aspect of this application, a module constituting the communication apparatus may be further configured to: perform the steps performed in the possible implementation of the third aspect, and achieve corresponding technical effects. For details, refer to the third aspect. Details are not described herein again.

A seventh aspect of embodiments of this application provides a communication apparatus, including at least one processor. The at least one processor is configured to execute a program or instructions in a memory, to cause the apparatus to implement the method according to any one of the first aspect or the possible implementations of the first aspect.

An eighth aspect of embodiments of this application provides a communication apparatus, including at least one processor. The at least one processor is configured to execute a program or instructions in a memory, to cause the apparatus to implement the method according to any one of the second aspect or the possible implementation of the second aspect.

A ninth aspect of embodiments of this application provides a communication apparatus, including at least one processor. The at least one processor is configured to execute a program or instructions in a memory, to cause the apparatus to implement the method according to any one of the third aspect or the possible implementation of the third aspect.

A tenth aspect of embodiments of this application provides a communication apparatus, including at least one logic circuit and an input/output interface. The logic circuit is configured to perform the method according to any one of the first aspect or the possible implementations of the first aspect.

An eleventh aspect of embodiments of this application provides a communication apparatus, including at least one logic circuit and an input/output interface. The logic circuit is configured to perform the method according to any one of the second aspect or the possible implementation of the second aspect.

A twelfth aspect of embodiments of this application provides a communication apparatus, including at least one logic circuit and an input/output interface. The logic circuit is configured to perform the method according to any one of the third aspect or the possible implementation of the third aspect.

A thirteenth aspect of embodiments of this application provides a computer-readable storage medium. The storage medium is configured to store one or more computer-executable instructions. When the computer-executable instructions are executed by a processor, the processor performs the method according to any one of the possible implementations of any one of the first aspect to the third aspect.

A fourteenth aspect of embodiments of this application provides a computer program product (also referred to as a computer program). When the computer program product is executed by a processor, the processor performs the method according to any one of the possible implementations of any one of the first aspect to the third aspect.

A fifteenth aspect of embodiments of this application provides a chip system. The chip system includes at least one processor, configured to support a communication apparatus in implementing a function in any one of the possible implementations of any one of the first aspect to the third aspect.

In a possible design, the chip system may further include a memory. The memory is configured to store program instructions and data that are necessary for a first communication apparatus. The chip system may include a chip, or may include a chip and another discrete device. Optionally, the chip system further includes an interface circuit. The interface circuit provides program instructions and/or data for the at least one processor.

A sixteenth aspect of embodiments of this application provides a communication system. The communication system includes the communication apparatus in the fourth aspect, the communication apparatus in the fifth aspect, and the communication apparatus in the sixth aspect; the communication system includes the communication apparatus in the seventh aspect, the communication apparatus in the eighth aspect, and the communication apparatus in the ninth aspect; or the communication system includes the communication apparatus in the tenth aspect, the communication apparatus in the eleventh aspect, and the communication apparatus in the twelfth aspect.

For technical effects brought by any design in the fourth aspect to the sixteenth aspect, refer to the technical effects brought by different designs in the first aspect to the third aspect. Details are not described herein again.

### BRIEF DESCRIPTION OF DRAWINGS

FIG. 1 is a diagram of a communication system in this application;
FIG. 2 is another diagram of a communication system in this application;
FIG. 3 is another diagram of a communication system in this application;
FIG. 4a is a diagram of a multicast communication process in this application;
FIG. 4b is another diagram of a multicast communication process in this application;
FIG. 4c is another diagram of a multicast communication process in this application;
FIG. 5 is another diagram of a multicast communication process in this application;
FIG. 6a is another diagram of a multicast communication process in this application;
FIG. 6b is another diagram of a multicast communication process in this application;
FIG. 6c is another diagram of a multicast communication process in this application;
FIG. 7 is a diagram of a communication method according to this application;
FIG. 8 is another diagram of a communication method according to this application;
FIG. 9 is another diagram of a communication method according to this application;
FIG. 10 is a diagram of a communication apparatus according to this application;
FIG. 11 is another diagram of a communication apparatus according to this application; and
FIG. 12 is another diagram of a communication apparatus according to this application.

### DESCRIPTION OF EMBODIMENTS

First, a part of terms in embodiments of this application are explained and described, to facilitate understanding of a person skilled in the art.
(1) Terminal device: The terminal device may be a wireless terminal device that can receive scheduling and indication information of a network device. The wireless terminal device may be a device that provides voice and/or data connectivity for a user, a handheld device having a wireless connection function, or another processing device connected to a wireless modem.
   The terminal device may communicate with one or more core networks or the internet through a radio access network (radio access network, RAN). The terminal device may be a mobile terminal device like a mobile telephone (also referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device like a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), a customer premises equipment (customer premises equipment, CPE), a terminal (terminal), a user equipment (user equipment, UE), a mobile terminal (mobile terminal, MT), an uncrewed aerial vehicle, or the like. The terminal device may alternatively be a wearable device and a terminal device in a next-generation communication system, for example, a terminal device in a 5G communication system or a terminal device in a future evolved public land mobile network (public land mobile network, PLMN).
(2) Network device: The network device may include an access network device, a core network device, and the like in a communication network.

In an implementation example, the access network device in the network device may be a radio access network (radio access network, RAN) node (or device) that connects a terminal device to a wireless network, and may also be referred to as a base station. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the access network device may include a central unit (central unit, CU) node, a distributed unit (distributed unit, DU) node, or a RAN device including the CU node and the DU node. In some implementations, the access network device may further include a satellite, an airplane, an uncrewed aerial vehicle, a ground station device connected to the satellite, the airplane, and the uncrewed aerial vehicle, and the like.

The access network device can send configuration information (for example, carried in a scheduling message and/or an indication message) to the terminal device, and the terminal device further performs network configuration based on the configuration information, so that network configurations of the access network device and the terminal device are aligned. Alternatively, a network configuration is preset on the access network device, and a network configuration is preset on the terminal device, so that network configurations of the access network device and the terminal device are aligned. Specifically, "alignment" means that when there is an interaction message between the network device and the terminal device, the network device and the terminal device have a consistent understanding on a carrier frequency for sending and receiving the interaction message, determining of a type of the interaction message, a meaning of field information carried in the interaction message, or another configuration of the interaction message.

In addition, in another possible case, the access network device may be another apparatus that provides a wireless communication function for the terminal device. A specific technology and a specific device form that are used by the network device are not limited in embodiments of this application. For ease of description, this is not limited in embodiments of this application.

In an implementation example, the core network device may be an entity network element or a logical network element included in a core network (core network, CN) component in a mobile communication system. Generally, the core network device can connect the terminal device to different data networks, and perform services such as charging, mobility management, session management, and user plane forwarding. In mobile communication systems of different standards, names of core network devices having a same function may be different.

In embodiments of this application, an apparatus configured to implement a function of the network device may be the network device, or may be an apparatus that can support the network device in implementing the function, for example, a chip system. The apparatus may be installed in the network device. In the solutions provided in embodiments of this application, an example in which the apparatus configured to implement the function of the network device is the network device is used to describe the technical solutions provided in embodiments of this application.

(3) Configuration and preconfiguration: In this application, both the configuration and the preconfiguration are used. The configuration means that a network device sends configuration information of some parameters or parameter values to a terminal device by using a message or signaling, so that the terminal device determines a communication parameter or a transmission resource based on the values or the information. Similar to the configuration, the preconfiguration may be parameter information or a parameter value negotiated by the network device and the terminal device in advance, may be parameter information or a parameter value used by the network device or the terminal device as specified in a standard protocol, or may be parameter information or a parameter value pre-stored in the network device or the terminal device. This is not limited in this application.

Further, these values and parameters may be changed or updated.

(4) Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active state (ACTIVE), or may be applied to a terminal device in a non-connected state (INACTIVE) or an idle state (IDLE).

In this application, unless otherwise specified, for same or similar parts of embodiments, mutual reference may be made between the embodiments. In various embodiments of this application and the implementations/methods/implementation methods in various embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

For ease of understanding a method provided in embodiments of this application, the following describes a system architecture of the method provided in embodiments of this application. It may be understood that the system architecture described in embodiments of this application is intended to describe the solutions in embodiments of this application more clearly, and does not constitute a limitation on the solutions provided in embodiments of this application.

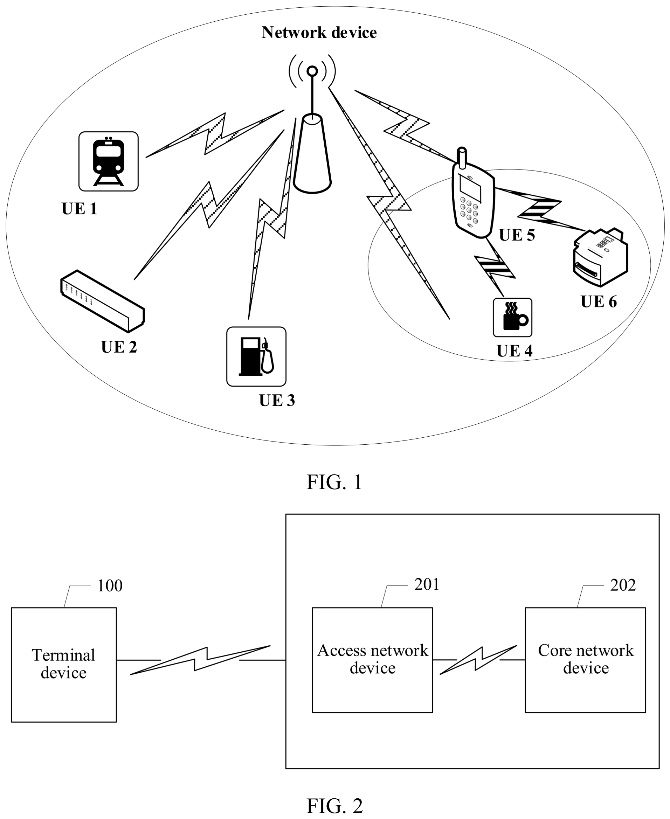

FIG. 1 is a diagram of a communication system according to an embodiment of this application. As shown in FIG. 1, a configuration information sending entity may be a network device, and a configuration information receiving entity may be a UE 1 to a UE 6. In this case, the network device and the UE 1 to the UE 6 form a communication system. In the communication system, the UE 1 to the UE 6 may send uplink data to the network device, and the network device may receive the uplink data sent by the UE 1 to the UE 6. In addition, the network device may send configuration information to the UE 1 to the UE 6.

FIG. 2 is another diagram of a communication system according to an embodiment of this application. As shown in FIG. 2, the communication system includes a terminal device 100, an access network device 201, and a core network device 202. The terminal device 100 and the access network device 201 may communicate with each other over a radio link. The access network device 201 and the core network device 202 may communicate with each other. In other words, the terminal device 100 may communicate with the access network device 201 and/or the core network device 202.

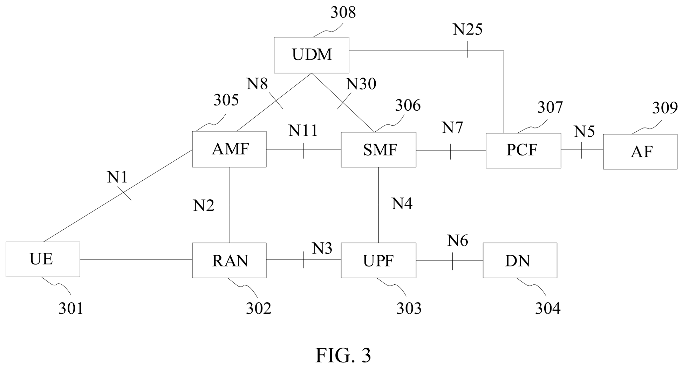

In an implementation example of the communication system shown in FIG. 2, the communication system may be a 5G network system. As shown in FIG. 3, the terminal device 100 in FIG. 2 may include a UE 301 in FIG. 3, the access network device 201 in FIG. 2 may include a RAN 302 in FIG. 3, and the core network device 202 in FIG. 2 may include one or more of the following logical network elements in FIG. 3: a user plane function (user plane function, UPF) network element 303, a data network (data network, DN) 304, an access and mobility management function (access and mobility management function, AMF) network element 305, a session management function (session management function, SMF) network element 306, a policy control function (policy control function, PCF) network element 307, a UDM network element 308, and an AF network element 309.

The following separately describes the devices or the network elements in FIG. 3.

The UPF 303 is mainly responsible for processing a user packet, for example, forwarding and charging the user packet.

The DN 304 is a network that provides a data transmission service for a user, for example, an internet protocol multimedia service (internet protocol multimedia service, IMS) or Internet (Internet). In addition, there may be one or more application servers in the DN.

The AMF 305 is mainly responsible for mobility management in a mobile network, for example, user location update, registration of a user with a network, and user switching.

The SMF 306 is mainly responsible for session management in the mobile network, for example, session establishment, modification, and release. Specific functions of the SMF 306 include, for example, allocating an IP address to a user or selecting a UPF that provides a packet forwarding function.

The PCF 307 is responsible for providing policies such as a QoS policy or a slice selection policy, for the AMF and the SMF.

The UDM 308 is configured to store subscriber data such as subscription information and authentication or authorization information.

The AF 309 is responsible for providing a service for a 3GPP network, for example, affecting service routing or interacting with the PCF to perform policy control.

For example, in FIG. 3, the UE 301 may establish a session (for example, a protocol data unit session (protocol data unit session, PDU session)) from the UE 301 to the RAN 302 to the UPF 303 to the DN 304, and access the DN 304 through the session.

In a communication system (for example, the communication system shown in FIG. 1,

FIG. 2, or FIG. 3), different communication devices may communicate with each other in a plurality of manners, for example, broadcast, multicast, or unicast. Currently, in a multicast communication process, a provider of multicast data (that is, a multicast source) may send a data packet once, so that two or more receivers in a multicast group (or a multicast group) receive the data packet, to improve utilization of bandwidth resources. Generally, a terminal device may serve as the receiver in the multicast group, and receive the multicast data from the multicast source via a network device.

The following uses a 5G communication system as an example to describe an example of a multicast process that may be used in this application.

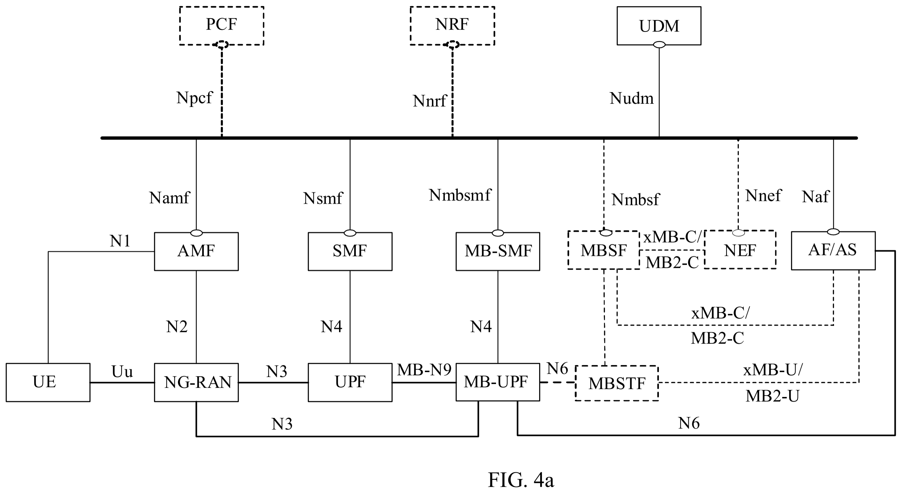

As shown in FIG. 4a, in comparison with the network architecture shown in FIG. 3, network elements that may be used in the multicast process further include a network repository function (network repository function, NRF) network element, a multicast and broadcast session management function (multicast and broadcast session management function, MB-SMF, M-SMF for short) network element, a multicast and broadcast user plane function (multicast and broadcast user plane function, MB-UPF, M-UPF for short) network element, a multicast and broadcast service function (multicast and broadcast service function, MBSF), a multicast and broadcast service transport function (multicast and broadcast service transport function, MBSTF), and the like. Interfaces between different network elements are shown in FIG. 4a.

In an implementation example, multicast or broadcast-specific functions of the network elements in FIG. 4a are shown as follows:
PCF: The PCF is an optional network element. This functional entity is required when dynamic policy charging control (policy charging control, PCC) is enabled. The PCF is specifically responsible for: processing quality of service (quality of service, QoS) of a multicast and broadcast service session (multicast and broadcast service session, MBS session), providing policy (policy) information to the MB-SMF, and interacting with a UDR to obtain QoS information.
MB-SMF: The MB-SMF is an entity that supports a broadcast feature, and may also function as a unicast SMF. Specifically, the MB-SMF is responsible for: MBS session management, including QoS control (control), MB-UPF configuration, interaction with the RAN to control broadcast flow (flow) transmission (broadcast session-specific function), interaction with the SMF to associate with a PDU session, interaction with the RAN to control multicast flow transmission (multicast session-specific function), and the like.
SMF: To support a 5G MBS feature, a unicast SMF needs to be enhanced, mainly including MB-SMF discovery, UE join (UE Join) authentication, interaction with the MB-SMF to manage multicast session contexts, interaction with the RAN to establish multicast transmission resources, and the like.
MB-UPF: The MB-UPF is a data plane gateway of a 5G MBS, and is mainly responsible for: interaction with the MB-SMF to obtain a data forwarding rule, transmission of data to the RAN by using a shared (shared) transmission method, transmission of data to the UPF by using an individual (individual) transmission method, and the like.
UPF: The UPF is mainly responsible for: interaction with the MB-UPF to receive data transmitted through individual delivery, and transmission of individual MBS data to a UE through the PDU session.
AMF: The AMF is mainly responsible for signaling routing and selection of broadcast NG-RANs.
NG-RAN: The NG-RAN processes an MBS QoS flow, sends data to the UE through point-to-multipoint (point to multipoint, PTM) and point-to-point (point-to-point, PTP) manners, configures an access stratum (access stratum, AS) to receive a broadcast flow, switches between PTM and PTP, supports Xn and N2 handover for a multicast session, processes session (Session) signaling, and establishes air interface broadcast and multicast resources.
UE: A main function of the UE is to receive multicast data through PTM or PTP, receive multicast data or broadcast data through PTM, process QoS, initiate session join (session Join) and session leave (session leave), and manage resources on a terminal side of a 5G multicast and broadcast service (5G multicast and broadcast service, 5MBS).
MBSF: The MBSF is an optional network element. The MBSF mainly supports the following functions: a service layer function, and interworking with a multimedia broadcast multicast service (multimedia broadcast multicast service, MBMS); interacting with the AF and the MB-SMF to support an operation of an MBS session, and determining a transmission parameter and a type of the MBS session; selecting an MB-SMF; controlling an MBSTF; determining an internet protocol (internet protocol, IP) multicast address of a sender; and the like.
MBSTF: The MBSTF is an optional network element, and mainly supports the following functions: an anchor of MBS data; serving as a source of internet protocol multicast (IP multicast); supporting general transmission functions such as frame, multi-flow, and forward error correction (forward error correction, FEC); and sending an input file as an object (object) or an object flow (object flow) in a multicast or broadcast (broadcast) manner.
AF: The AF mainly supports the following functions: providing service information to a 5G core (5G core, 5GC) network and requesting a multicast or broadcast service; instructing (instructing) an MBS session operation with the 5GC; and the like.
UDM: The UDM mainly supports the following functions: supporting subscription or contract management of a multicast session.
UDR: The UDR mainly supports the following functions: supporting management of service parameters, including a QoS requirement and serving MB-SMF information; supporting UE authorization management for a multicast session; and the like.

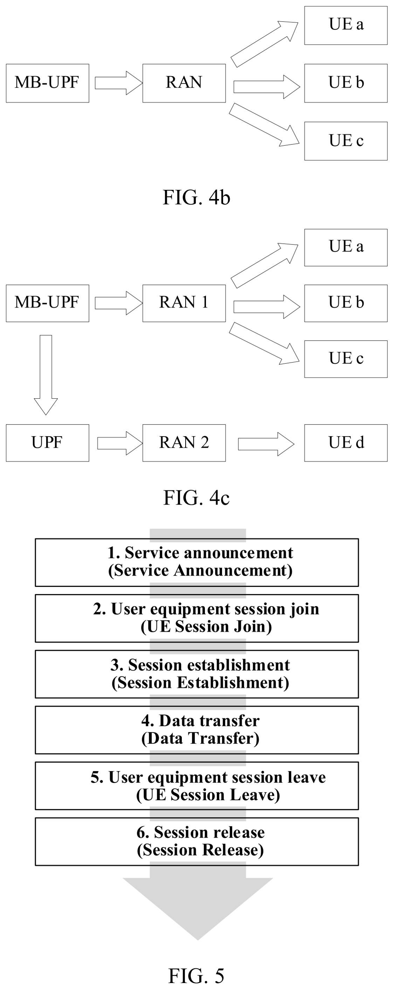

The network architecture shown in FIG. 4a may be used to implement a unicast-based multicast technology. The unicast-based multicast technology is intended to resolve a problem of how to further save network resources on a basis of reusing a unicast procedure as much as possible, to be specific, a user plane network element selects one copy of data streams with same content that are sent to different UEs in a group and sends the copy (from the UPF to the AN), to improve efficiency of air interface side and core network resource usage. For a basic idea, refer to a procedure shown in FIG. 4b. The following descriptions are included.

In an implementation example, in the unicast-based multicast technology, a data path processing status among the MB-UPF, the AN, and the UE may be considered. A data packet between the AS and the MB-UPF may be a per-user equipment (per-UE) multicast application data packet, may be a per-UE unicast data packet, or may be a multicast data packet for multicast transmission. This is not limited. Application data packets from the MB-UPF to the AN to the UE or from the AN to the UE are multicast data packets with same content (a destination IP address is a multicast address). A 5G MBS multicast session supports two transmission modes: an individual delivery mode (Individual delivery mode) and a shared delivery mode (Shared delivery mode).

For example, as shown in FIG. 4b, the shared delivery mode is a main scenario of multicast transmission. To be specific, a transmission path from the MB-UPF to the RAN side and on an air interface side from the RAN to the UE is shared by several users in a multicast group. For example, for user a, user b, and user c (denoted as UE a, UE b, and UE c in the figure) in group x, one piece of data may be transmitted from the MB-UPF to the RAN side. After the RAN receives the data, the RAN can transmit a piece of data through the air interface, and user a, user b, and user c all receive the data.

For example, as shown in FIG. 4c, the individual delivery mode is a solution used when a base station on which the UE camps does not support an MBS capability, for example, a RAN 2 in FIG. 4c. A specific transmission path for multicast data of UE d is a path between the MB-UPF, a UPF having a unicast capability, the RAN 2, and UE d. Because data on the RAN side is actually from the unicast UPF, the RAN 2 considers the data as unicast data.

In addition, considering that the data network may not support IP multicast, the application server may interact with the 5G core network in advance before sending data, to select an ingress network element (namely, the MB-UPF) for sending multicast data of a multicast service. In addition, a session management network element MB-SMF managing the MB-UPF network element is selected. For ease of understanding, the following briefly describes a join procedure in the unicast-based multicast technology.
1. The UE sends a join request to the SMF by using a NAS message (for example, a PDU session modification request or a PDU session establishment request) or a user plane join request message (for example, an IGMP join message). The join request includes multicast group information or multicast session information (where a multicast session is used to send data corresponding to the multicast group, and the session information may be an MBS session ID).
2. After receiving the join request message of the UE, the SMF obtains multicast information (where the SMF may obtain the multicast information from the MB-SMF or the UDR based on the multicast group information or the multicast session information), and generates, based on the multicast information, context information corresponding to multicast, and optionally, corresponding unicast QoS flow information. The corresponding unicast QoS flow information is generated herein, so that when the UE moves to a base station that does not support an MBS, the base station may perform data transmission for the UE by using a corresponding unicast QoS flow (that is, in the individual delivery mode), and provide the corresponding unicast QoS flow for the base station in advance, to better ensure service continuity during handover.
3. Then, the SMF sends a request message to the RAN via the AMF, where the message includes the generated information. The RAN establishes or modifies, based on the message sent by the SMF, the multicast context information corresponding to multicast, and may further establish unicast context information. Then, if the MB-UPF and the RAN support multicast transmission, the RAN joins a multicast address sent by the SMF. If the RAN does not support multicast, the RAN may allocate tunnel identification information and return the tunnel identification information to the SMF, and the SMF further sends the tunnel identification information to the MB-SMF. The MB-SMF further sends, to the MB-UPF, a tunnel identifier allocated by the RAN, to establish a unicast transmission channel between the RAN and the MB-UPF. The transmission channel between the RAN and the MB-UPF may be used for per-multicast session (per-MBS session) transmission.

In an implementation example, a process of using a multicast service by an application service is shown in FIG. 5, and includes the following steps.
1. Service announcement (Service Announcement): A service server sends a service announcement message to a UE. The service announcement message includes a TMGI or a source-specific IP multicast address, and further includes other service description information such as codec information.
2. User equipment session join (UE Session Join): The UE joins a multicast session, and the UE indicates, to a 5GC, that the UE expects to receive data from the multicast session.
3. Session establishment (Session Establishment): A multicast session is established. It indicates that a transmission resource for transmitting downlink data may be established between the 5GC and an access network device (for example, an NG-RAN). Session establishment may be triggered by UE join (join).
4. Data transfer (Data Transfer): Downlink multicast data is transferred to the UE.
5. User equipment session leave (UE Session Leave): The UE leaves the multicast session, in other words, the UE no longer expects to receive data from the multicast session.
6. Session release (Session Release): Transmission of downlink data is no longer performed for the service, and resources of a network device in a 5G system (5G system, 5GS) are released.

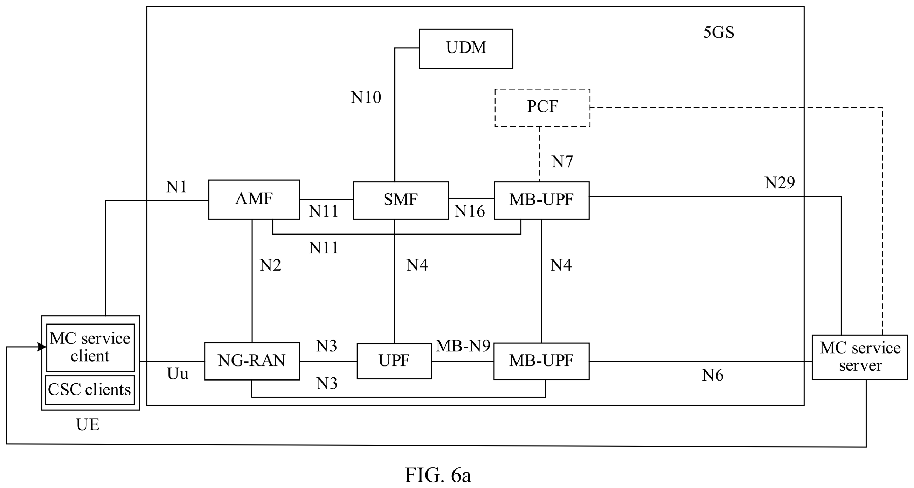

In an implementation example, FIG. 6a shows an implementation of an application layer architecture and a functional model based on a 5MBS architecture. In FIG. 6a, an MC service server directly interacts with a 5GC without using an NEF network element, an MBSF network element, an MBSTF network element, or the like (in other words, these functions may be considered as non-existent or not deployed).

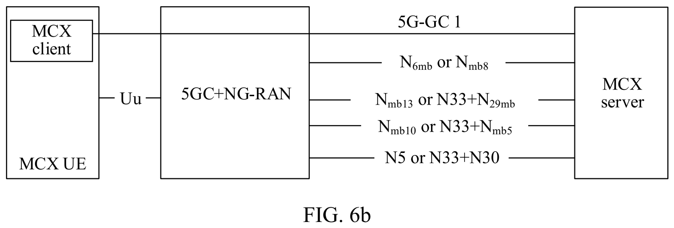

In another implementation example, FIG. 6b is an implementation of an application layer architecture and a functional model based on a 5MBS architecture. In FIG. 6b, an MC service server interacts with a 5GC in a plurality of manners, and may interact with the 5GC via an NEF network element, an MBSF network element, an MBSTF network element, or the like. In addition, in FIG. 6b, mission critical service related information (mission critical everything, MCX for short) may include one or more of mission critical push to talk (mission critical push to talk, MCPTT), a mission critical video (mission critical video, MCVideo), and mission critical data (mission critical data, MCData).

In addition, in an application layer, the following server/client (server/client) interfaces that support an MBS feature may be included:
(1) A server/client interface is MC service server-MC service client.
   An MC service client may be a software functional module of a terminal device, is located on an operating system, and supports functions such as SIP registration of a trunking service, service authentication and authorization, and group call, private call, emergency call, media floor, and media data processing. The foregoing functions may be implemented by using a session initiation protocol (session initialization protocol, SIP), a real-time transport protocol (Real-time transport protocol, RTP), a real-time transport control protocol (Real-time transport control protocol, RTCP), or a hypertext transfer protocol (hypertext transfer protocol, HTTP). In terms of supporting an 5MBS, the MC service client reports to a server whether a broadcast and multicast capability is supported and a specific broadcast and multicast capability (an eMBMS, the 5MBS, or both); receives a service/session announcement (service/session announcement) message sent by an MC service server, where the message includes MBS session information (an MBS session ID, frequency domain (frequency) information, and the like); supports monitoring broadcast and multicast received quality, and reports broadcast and multicast received quality information to the MC service server; and after UE successfully joins a multicast MBS session (multicast MBS session), reports information indicating that the UE has successfully joined the MBS session.
   In addition, the MC service server is a peer server-side function of the MC service client. The MC service server supports receiving SIP registration from the MC service client and authorization of services, is responsible for services such as group call, private call, and emergency call management, and is responsible for floor management and determining and media data distribution. In terms of supporting the 5MBS, the MC service server interacts with a core network to create an MBS session; peer-supports UE-side capabilities, in other words, sends a service/session announcement message to the MC service client, where the service/session announcement message includes MBS session information (such as an MBS session ID and a frequency); and receives broadcast and multicast received quality information from the UE. The MC service server receives information indicating that the UE has successfully joined the MBS session; and determines whether to send data to the MBS session based on information reported by the UE.
(2) Another server/client interface is NRM server-NRM client.

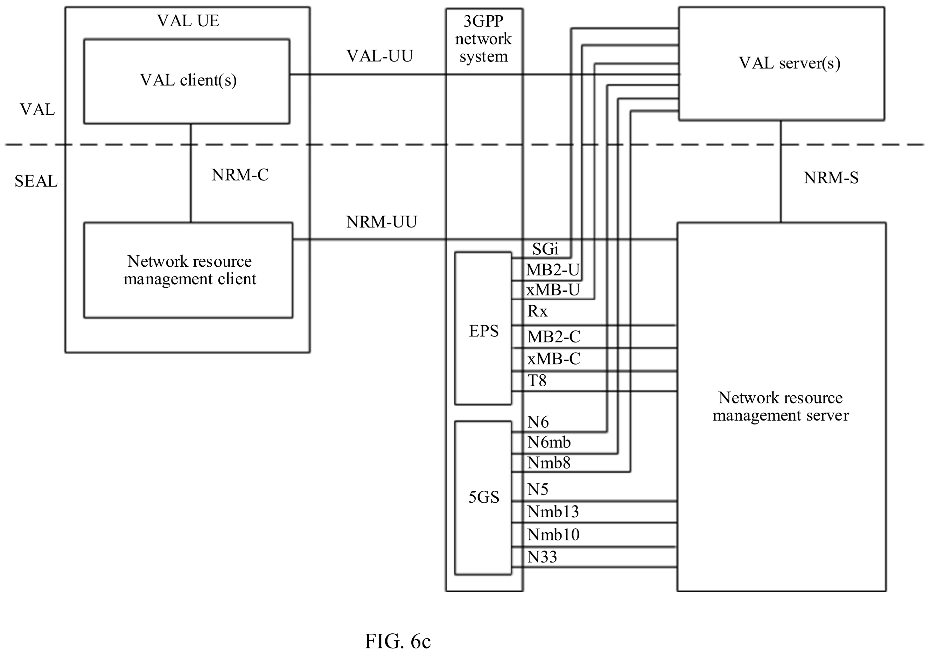

An NRM client and an NRM server are a group of peer entities that support network capability resource management. The NRM client is a software component or a software module in or above an operating system. The NRM client and NRM server have the same functions as the MC service client and MC service server when using the 5MBS. Specifically, the NRM client and the NRM server may use the SIP and the HTTP protocol to support signaling, message, and data exchange between the NRM client and the NRM server. For example, FIG. 6c shows a functional model using an 5MBS architecture based on a service enabler application layer (service enabler application layer, SEAL) model.

In the foregoing multicast communication process, the terminal device serves as a multicast receiver, and may receive multicast data via the network device. The terminal device may be in different connection states, and in the different connection states (for example, an RRC connected state or an RRC inactive state), the terminal device may receive the multicast data in different manners. Therefore, appropriately setting a connection state for the terminal device to receive the multicast data can increase a quantity of users served by a multicast session, and also increase a quantity of multicast session users that can be served in a single cell.

In a possible implementation, the UDM/UDR may store indication information indicating a status of receiving the multicast data by the terminal device. Then, when the terminal device establishes a PDU session related to multicast, a serving SMF of the terminal device obtains the indication information from the UDM/UDR. Next, the SMF may send the information to the access network device in a PDU session procedure. Subsequently, after receiving the multicast data of the terminal device, the access network device may schedule, based on the indication information (and other information that may exist, for example, information such as received quality of the terminal device and a capability of the terminal device), a part of terminal devices to switch to the RRC inactive state to receive the multicast data, and schedule the other part of terminal devices to keep in the RRC connected state to receive the multicast data.

However, in the foregoing implementation, how to generate the indication information, and how to increase, by using the indication information, a success rate of the terminal device in receiving the multicast data, to increase a quantity of users that can be served by a multicast session, and increase a quantity of users that can be served in a single cell are unresolved problems.

To resolve these problems, this application provides a communication method and a related device, to increase a success rate of a terminal device in receiving multicast data. The following provides descriptions with reference to more accompanying drawings.

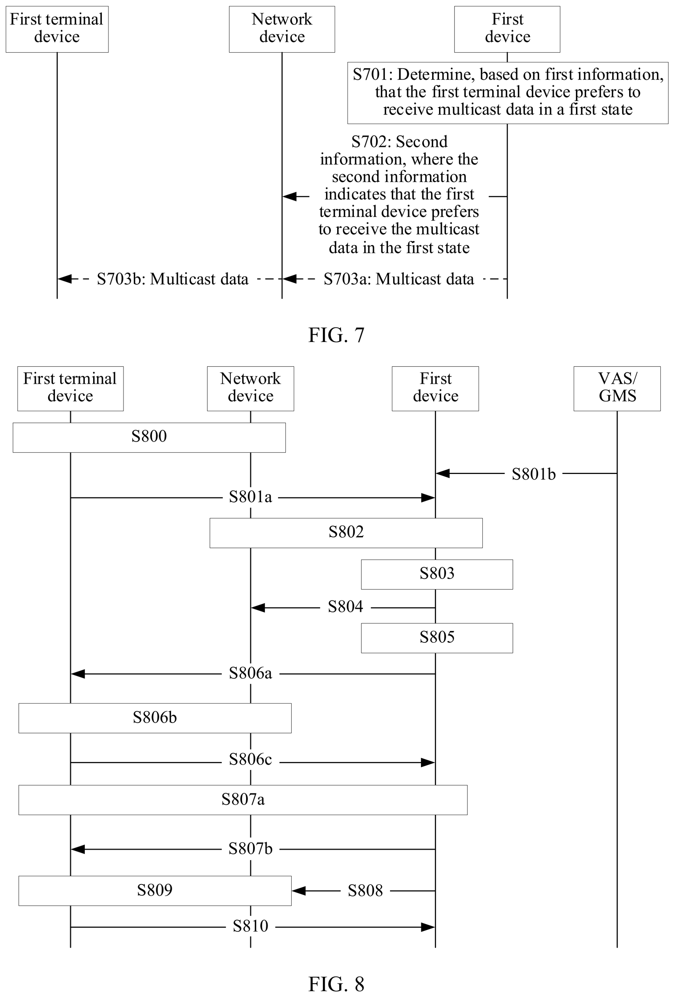

FIG. 7 is a diagram of an implementation of a communication method according to this application. The method includes the following steps.

It should be noted that FIG. 7 shows the method by using an example in which a first device, a first terminal device, and a network device serve as execution entities of interaction. However, the execution entities of the interaction are not limited in this application. For example, in FIG. 7 and corresponding implementations, an execution entity of S701, S702, and S703a is the first device, or the execution entity may be a chip, a chip system, or a processor that supports the first device in implementing the method, or may be a logical module or software that can implement all or a part of functions of the first device. In FIG. 7 and the corresponding implementations, the network device in S702, S703a, and S703b may be replaced with a chip, a chip system, or a processor that supports the network device in implementing the method, or may be replaced with a logical module or software that can implement all or a part of functions of the network device. In FIG. 7 and the corresponding implementations, the first terminal device in S703b may be replaced with a chip, a chip system, or a processor that supports the first terminal device in implementing the method, or may be replaced with a logical module or software that can implement all or a part of functions of the first terminal device.

S701: The first device determines, based on first information, that the first terminal device prefers to receive multicast data in a first state.

The first state may include a radio resource control (radio resource control, RRC) connected (RRC CONNECTED) state or an RRC inactive (RRC INACTIVE) state.

It should be understood that the first device may be a server or a logical network element that provides multicast data (or a multicast service). For example, the first device may be an AF network element, an AS, or a service server.

It should be noted that, in different connection states, a terminal device may receive the multicast data in different processing manners. For example, when the first terminal device is in the RRC connected state, when receiving the multicast data from a channel indicated by a multicast multicast radio bearer configuration (multicast MRB configuration), the first terminal device may provide a hybrid automatic repeat request (hybrid automatic repeat request, HARQ) feedback. If a data packet is lost, an access network device may perform point-to-point (point-to-point, PTP) retransmission. It should be understood that the HARQ feedback may be provided by a medium access control (medium access control, MAC) layer of the first terminal device. When the first terminal device is in the RRC inactive state, when receiving the multicast data from the channel indicated by the multicast multicast radio bearer configuration, the first terminal device may not send the HARQ feedback. If a data packet is lost, another protocol layer other than the MAC layer, for example, a radio link control (radio link control, RLC) layer or a packet data convergence protocol (packet data convergence protocol, PDCP) layer, of the first terminal device performs processing. Generally, compared with the terminal device in the RRC inactive state, the terminal device in the RRC connected state may have better received quality, and a receiving success rate may be higher.

In a possible implementation, the first information includes one or a combination of more of the following information A to information I:
information A: capability information of the first terminal device, where the capability information may indicate that the first terminal device supports receiving the multicast data in the RRC inactive state;
information B: preference information of the first terminal device, where the preference information may indicate that the first terminal device prefers to receive the multicast data in the first state;
information C: a multicast role of the first terminal device in a group corresponding to the multicast data;
information D: a location of the first terminal device;
information E: a quantity of multicast groups that the first terminal device joins;
information F: a quantity of multicast sessions that the first terminal device has joined, where
optionally, the first terminal device may have joined zero multicast sessions, or may have joined one or more multicast sessions, and the one or more multicast sessions may include a first multicast session, or may not include the first multicast session, depending on whether the first terminal device has joined the first multicast session;
information G: received quality information of the first terminal device for the first multicast session, where the first multicast session is used for transmission of the multicast data, and for example, the received quality information may include one or more of reference signal received power (reference signal received power, RSRP), reference signal received quality (reference signal received quality, RSRQ), and a received signal strength indicator (received signal strength indicator, RSSI);
information H: a service communication model of the first terminal device; and
information I: one or more floor request messages from the first terminal device.

It should be understood that the first device may learn of the foregoing information (that is, information A to information I) in a plurality of manners.

In an implementation example, the first device may learn of information A to information I in a manner of reporting the foregoing information by the first terminal device.

In another implementation example, the first device may learn of information A and information B in a manner of locally determining by a client deployed on the first device. For example, a server (including an MC service server, an NRM server, or the like) deployed on the first device may determine the capability information and the preference information of the first terminal device based on an operating system version number, or the server (including the MC service server, the NRM server, or the like) deployed on the first device may determine the capability information and the preference information of the first terminal device based on a modem (modem) version number of a client (for example, an MC service client or an NRM client) deployed on the terminal device.

In another implementation example, the first device may obtain a part or all of information A to information I in a manner of receiving the foregoing information via another server. For example, a location management server or a gateway mobile location center (gateway mobile location center, GMLC) may provide information D for the first device, and a VAS may provide information A to information H for the first device.

Therefore, the first information is used as one of determining bases for the first device to determine that the first terminal device prefers to receive the multicast data in the first state. The first information may be implemented by using the foregoing one or a combination of a plurality of pieces of information, to improve flexibility of implementing the solution. In addition, because the one or the combination of the plurality of information A to information I can reflect an actual service status of the first terminal device to some extent, the first state of the first terminal device for receiving the multicast data can be set more accurately based on the one or the combination of the plurality of pieces of information, to avoid setting an inappropriate/unnecessary terminal device to receive the multicast data in the RRC connected state, so as to save transmission resources and improve communication efficiency. Moreover, after such a setting operation, system resources can be fully used, a quantity of users that can be served by a multicast session is increased, and a quantity of users that can be served in a single cell is increased, so that overall service experience and user experience of a single terminal device (for example, the first terminal device) are improved.

For ease of understanding, the following describes implementations of information A to information I by using examples with reference to some implementation examples.

In an implementation example, in step S701, for information A (where the first information includes the capability information of the first terminal device), that the first device determines, based on the first information, that the first terminal device prefers to receive the multicast data in the first state includes: When the capability information indicates that the first terminal device supports receiving the multicast data in the RRC inactive state, the first device determines that the first terminal device prefers to receive the multicast data in the RRC inactive state; or when the capability information indicates that the first terminal device does not support receiving the multicast data in the RRC inactive state, the first device determines that the first terminal device prefers to receive the multicast data in the RRC connected state. In this way, the first device can determine, based on the capability information, that the first terminal device prefers to receive the multicast data in the RRC inactive state, so that the first state indicated by second information sent by the first device in subsequent step S702 can adapt to a capability of the first terminal device, and further, the first terminal device can subsequently receive the multicast data in the first state supported by the capability of the first terminal device.

Optionally, the capability information in information A indicates that the first terminal device does not support receiving the multicast data in the RRC inactive state. Therefore, in step S701, the first device may determine that the first terminal device prefers to receive the multicast data in the RRC connected state, to avoid a failure of receiving the multicast data by the first terminal device because the first terminal device is scheduled to the RRC inactive state.

In another implementation example, in step S701, for information B (where the first information includes the preference information of the first terminal device), that the first device determines, based on the first information, that the first terminal device prefers to receive the multicast data in the first state includes: When the preference information indicates that the first terminal device prefers to receive the multicast data in the RRC connected state, the first device determines that the first terminal device prefers to receive the multicast data in the RRC connected state; or when the preference information indicates that the first terminal device prefers to receive the multicast data in the RRC inactive state, the first device determines that the first terminal device prefers to receive the multicast data in the RRC inactive state. In this way, the first device can determine, based on the preference information, that the first terminal device prefers to receive the multicast data in the RRC connected state or the RRC inactive state, so that the first state indicated by the second information sent by the first device in subsequent step S702 can adapt to a preference of the first terminal device, and further, the first terminal device can subsequently receive the multicast data in the first state that meets the preference of the first terminal device.

In another implementation example, in step S701, for information C (where the first information includes the multicast role of the first terminal device in the group corresponding to the multicast data), that the first device determines, based on the first information, that the first terminal device prefers to receive the multicast data in the first state includes: When the multicast role of the first terminal device is a dispatcher (dispatcher) or a commander, the first terminal device may perform an operation like scheduling or frequent uplink. In this case, the first device determines that the first terminal device prefers to receive the multicast data in the RRC connected state, so that the first terminal device can quickly perform data transmission in the RRC connected state by using an RRC connection; or when the multicast role of the first terminal device is a group member (to be specific, the multicast role is not a dispatcher or a commander), the first device determines that the first terminal device prefers to receive the multicast data in the RRC inactive state. In this way, the first device can determine, based on the multicast role of the first terminal device, that the first terminal device prefers to receive the multicast data in the RRC connected state or the RRC inactive state, so that the first state indicated by the second information sent by the first device in subsequent step S702 can adapt to the multicast role of the first terminal device.

In another implementation example, in step S701, for information D (where the first information includes the location of the first terminal device), that the first device determines, based on the first information, that the first terminal device prefers to receive the multicast data in the first state includes: An occurrence location of an incident corresponding to the multicast data may be used as a reference point. For example, the incident may include an emergency like an earthquake or a typhoon. When a distance between the location of the first terminal device and the reference point is less than or equal to a threshold, the first terminal device may need to receive the multicast data quickly or with high quality because the distance is short. In this way, the first device determines that the first terminal device prefers to receive the multicast data in the RRC connected state; or when the distance between the location of the first terminal device and the reference point is greater than or equal to the threshold, the first terminal device may not need to receive the multicast data quickly or with high quality because the distance is long. In this way, the first device determines that the first terminal device prefers to receive the multicast data in the RRC connected state. Therefore, the first device can determine, based on the location of the first terminal device, that the first terminal device prefers to receive the multicast data in the RRC connected state or the RRC inactive state, so that the first state indicated by the second information sent by the first device in subsequent step S702 can adapt to a relationship between the location of the first terminal device and the reference point.

In another implementation example, in step S701, for information E (where the first information includes the quantity of multicast groups that the first terminal device joins), that the first device determines, based on the first information, that the first terminal device prefers to receive the multicast data in the first state includes: When the quantity of multicast groups that the first terminal device joins is greater than or equal to a threshold, the first terminal device may need to receive the multicast data quickly or with high quality. In this way, the first device determines that the first terminal device prefers to receive the multicast data in the RRC connected state; or when the quantity of multicast groups that the first terminal device joins is less than or equal to the threshold, the first terminal device may not need to receive the multicast data quickly or with high quality. In this way, the first device determines that the first terminal device prefers to receive the multicast data in the RRC connected state. Therefore, the first device can determine, based on the quantity of multicast groups of the first terminal device, that the first terminal device prefers to receive the multicast data in the RRC connected state or the RRC inactive state, so that the first state indicated by the second information sent by the first device in subsequent step S702 can adapt to the quantity of multicast groups that the first terminal device joins.

In another implementation example, in step S701, for information F (where the first information includes the quantity of multicast sessions that the first terminal device has joined), that the first device determines, based on the first information, that the first terminal device prefers to receive the multicast data in the first state includes: When the quantity of multicast sessions that the first terminal device has joined is greater than or equal to a threshold, the first terminal device may need to receive the multicast data quickly or with high quality. In this way, the first device determines that the first terminal device prefers to receive the multicast data in the RRC connected state; or when the quantity of multicast sessions that the first terminal device has joined is less than or equal to the threshold, the first terminal device may not need to receive the multicast data quickly or with high quality. In this way, the first device determines that the first terminal device prefers to receive the multicast data in the RRC connected state. In this way, the first device can determine, based on the quantity of multicast sessions that the first terminal device has joined, that the first terminal device prefers to receive the multicast data in the RRC connected state or the RRC inactive state, so that the first state indicated by the second information sent by the first device in subsequent step S702 can adapt to the quantity of multicast sessions that the first terminal device has joined.

In another implementation example, in step S701, for information G (where the first information includes the received quality information of the first terminal device for the first multicast session), that the first device determines, based on the first information, that the first terminal device prefers to receive the multicast data in the first state includes: When received quality indicated by the received quality information is less than or equal to a threshold, the first terminal device may need to receive the multicast data quickly or with high quality. In this way, the first device determines that the first terminal device prefers to receive the multicast data in the RRC connected state; or when the received quality indicated by the received quality information is greater than or equal to the threshold, the first terminal device may not need to receive the multicast data quickly or with high quality. In this way, the first device determines that the first terminal device prefers to receive the multicast data in the RRC connected state. In this way, the first device can determine, based on the received quality information of the first terminal device, that the first terminal device prefers to receive the multicast data in the RRC connected state or the RRC inactive state, so that the first state indicated by the second information sent by the first device in subsequent step S702 can adapt to the quantity of multicast sessions that the first terminal device has joined.

In another implementation example, in step S701, for information H (where the first information includes the service communication model of the first terminal device), that the first device determines, based on the first information, that the first terminal device prefers to receive the multicast data in the first state includes: When the service communication model of the first terminal device indicates frequent uplink and a large uplink data transmission amount/high transmission frequency or a large downlink data transmission amount/high transmission frequency, the first device determines that the first terminal device prefers to receive the multicast data in the RRC connected state; or when the service communication model of the first terminal device indicates downlink only or uplink only, the first device determines that the first terminal device prefers to receive the multicast data in the RRC inactive state. In this way, when the service communication model indicates frequent uplink, because the terminal device may need to frequently initiate RRC connection resume requests to send uplink data in the RRC inactive state, the first device may determine that the first terminal device prefers to receive the multicast data in the RRC connected state, to reduce power consumption and implementation complexity of the first terminal device. Alternatively, when the service communication model indicates downlink only, because the terminal device may still receive downlink-only data in the RRC inactive state, the first device may determine that the first terminal device prefers to receive the multicast data in the RRC inactive state, to reduce power consumption of the first terminal device.

In another implementation example, in step S701, for information I (where the first information includes the one or more floor request messages from the first terminal device), that the first device determines, based on the first information, that the first terminal device prefers to receive the multicast data in the first state includes: When a total quantity of the one or more floor request messages exceeds a first threshold and/or frequency of the one or more floor request messages exceeds a second threshold, the first device determines that the first terminal device prefers to receive the multicast data in the RRC connected state. In this way, when the first information includes the one or more floor request messages from the first terminal device, and when the total quantity of the one or more floor request messages exceeds the first threshold and/or the frequency of the one or more floor request messages exceeds the second threshold, the first terminal device may have a high uplink transmission requirement. In this case, the first device may determine that the first terminal device prefers to receive the multicast data in the RRC connected state, to meet the high uplink transmission requirement of the first terminal device, and reduce power consumption and implementation complexity of the first terminal device.

Optionally, in addition to whether the total quantity of the one or more floor request messages exceeds the first threshold and/or whether the frequency of the one or more floor request messages exceeds the second threshold, which are/is used as bases/a basis for determining the first state, information I may further include other statistical information of the one or more floor request messages, for example, a time interval between any two floor request messages. When the time interval is less than or equal to a threshold, the first device determines that the first terminal device prefers to receive the multicast data in the RRC connected state; or when the time interval is greater than or equal to the threshold, the first device determines that the first terminal device prefers to receive the multicast data in the RRC inactive state.

It should be noted that a threshold (for example, the threshold, the first threshold, the second threshold, and the third threshold mentioned above) in this application may be statically preset, and a value (value) of the threshold does not change; or the threshold may be dynamically adjusted, and the value of the threshold may change. This is not limited herein.

In another implementation example, in step S701, the first information may include a combination of two or more of information A to information I, so that the first device determines, based on the combination, that the first terminal device prefers to receive the multicast data in the first state. In this case, the first information further includes priority information corresponding to at least one of the foregoing information A to information I. Specifically, the priority information may indicate a priority of the at least one of the foregoing information, so that when the first information includes two or more items of the at least one of the foregoing information, the first device can select one of the two or more items as a determining basis based on the priority information, to avoid behavior confusion caused when a conflict exists between the two or more items. In this way, the first device can determine, based on the priority indicated by the priority information, that the first terminal device prefers to receive the multicast data in the first state.

Optionally, the priority information is preconfigured/predefined, or the priority information is from another device (for example, a core network device or a server). This is not limited herein.

Optionally, in addition to the foregoing implementations of information A to information I, the first information may further include other information content. For example, the first information may include information J, and information J may indicate a state of the first terminal device. Correspondingly, in step S701, for information J (where the first information includes the state of the first terminal device), that the first device determines, based on the first information, that the first terminal device prefers to receive the multicast data in the first state includes: When the state of the first terminal device is an emergency state (emergency state), the first device determines that the first terminal device prefers to receive the multicast data in the RRC connected state; or when the state of the first terminal device is not the emergency state, the first device determines that the first terminal device prefers to receive the multicast data in the RRC inactive state (where power consumption of the first terminal device can be reduced). In this way, when the first information includes the state of the first terminal device, and when the state of the first terminal device is the emergency state, the first terminal device may have a high uplink transmission requirement. In this case, the first device may determine that the first terminal device prefers to receive the multicast data in the RRC connected state, to meet the high uplink transmission requirement of the first terminal device, and reduce power consumption and implementation complexity of the first terminal device.

In a possible implementation, the multicast data is multicast data of the first multicast session. Specifically, the multicast data of the first terminal device may be multicast data of a multicast session (for example, the first multicast session), so that the first device can set, for a multicast session granularity, the first state of the terminal device for receiving the multicast data, to increase a success rate of the terminal device in receiving the multicast data in the first multicast session.

In a possible implementation, the capability information and the preference information (that is, the foregoing information A and/or information B) are from an MC service client, and the MC service client is deployed on the first terminal device. Specifically, when the capability information and the preference information in the first information are from the first terminal device, the capability information and the preference information may be from the MC service client in the first terminal device. Correspondingly, the first device may receive the capability information and the preference information from the MC service client via an MC service server, so that the foregoing solution can adapt to a communication scenario of the MC service client and the MC service server.

In a possible implementation, the method further includes: The first device receives a first message from the MC service client, where the first message carries the capability information and/or the preference information (that is, the foregoing information A and/or information B), and the first message is a mission critical service registration message (where the message indicates registration of the MC service client on the terminal device with a client (client), or the message indicates registration of a terminal device on which the MC service client is deployed), an emergency service registration request message (where the message indicates registration of the MC service client on the terminal device with a client, or the message indicates registration of a terminal device on which the MC service client is deployed), a UE session join notification message (where the message indicates that the terminal device has successfully joined a multicast and broadcast service (multicast and broadcast service, MBS) session), or a multicast and broadcast service session listening status report message (where the message indicates whether the terminal can receive data of the MBS session, or the message indicates received quality of the terminal device in the MBS session, a level (level) of the received quality, and the like). Specifically, when the capability information and the preference information may be from the MC service client in the first terminal device, the first device may obtain the capability information and/or the preference information by using the first message, and the first message may be implemented by using any one of the foregoing messages, to improve flexibility of implementing the solution.

In a possible implementation, the capability information and/or the preference information (that is, the foregoing information A and/or information B) are/is from the NRM client, the VAS, or a GMS, and the NRM client is deployed on the first terminal device. Specifically, the capability information and/or the preference information received by the first device may be from the NRM client deployed on the first terminal device, the VAS, or the GMS, to provide a plurality of implementations for the first device to obtain the capability information and/or the preference information.

In a possible implementation, the method further includes: The first device receives a second message from the NRM client, where the second message carries the capability information and/or the preference information (that is, the foregoing information A and/or information B), and the second message is an NRM registration request message (where the message indicates registration of the NRM client on the terminal device with a client, or the message indicates registration of the terminal device on which the NRM client is deployed), an NRM service registration request message (where the message indicates registration of the NRM client on the terminal device with a client, or the message indicates registration of the terminal device on which the NRM client is deployed), a UE session join notification message (where the message indicates that the terminal device has successfully joined an MBS session), or a multicast and broadcast service session listening status report message (where the message indicates whether the terminal can receive data of the MBS session, or the message indicates received quality of the terminal device in the MBS session, a level (level) of the received quality, and the like). Specifically, when the capability information and the preference information may be from the NRM client in the first terminal device, the first device may obtain the capability information and/or the preference information by using the second message, and the second message may be implemented by using any one of the foregoing messages, to improve flexibility of implementing the solution.

S702: The first device sends the second information to the network device.

Correspondingly, the network device receives the second information.

The second information may indicate that the first terminal device prefers to receive the multicast data in the first state.

It should be understood that, in step S702, a receiver of the second information sent by the first device may be the network device. The network device may be a network device connected to the first terminal device, or the network device may be a device that provides a network service for the first terminal device. The network device may include an access network device, a core network device, and/or the like. For example, when the network device includes the access network device, the first device may send the second information to the access network device through a direct link or an indirect link between the first device and the access network device. For another example, when the network device includes the core network device, the first device may send the second information to the core network device through a direct link or an indirect link between the first device and the core network device. For another example, when the network device includes the access network device and the core network device, the first device sends the second information to both the access network device and the core network device.

For example, the network device includes the access network device or the core network device (for example, an NEF, a UMD, or an MB-SMF). In a process in which the first device sends the second information to the network device in step S702, the first device may send the second information to the access network device via the core network device, or the first device sends the second information to the core network device. Subsequently, in a process in which the core network device and the access network device establish a multicast session of the first terminal device, the core network device sends the second information to the access network device.

The network device may be a UDM network element or a UDR network element in a core network element, and the first device may specifically send the second information to the UDM network element or the UDR network element via an NEF network element. For example, in this process, the first device invokes a service-specific parameter provisioning (Service-specific parameter provisioning) message of the NEF, and sends the second information to the UDM or the UDR via the NEF.

Optionally, the second information is carried in multicast and broadcast service assistance information or another message/other signaling/other information. This is not limited herein.

Optionally, the second information sent by the first device to the network device in step S702 may be sent at a multicast session granularity (for example, when the second information is carried in the multicast and broadcast service assistance information). To be specific, the second information may indicate that a terminal device in a multicast session prefers to receive the multicast data in the first state, and the terminal device in the multicast session includes the first terminal device and another terminal device that may exist. In other words, for different multicast sessions in a multicast and broadcast service session list (MBS session list), the different multicast sessions may correspond to different multicast and broadcast service session identifiers (MBS session IDs). The first device may send different second information, to respectively indicate that one or more terminal devices in multicast sessions corresponding to different multicast and broadcast service session identifiers prefer to receive multicast data in the first state.

Optionally, the second information sent by the first device to the network device in step S702 may include information indicating that terminal devices in different multicast sessions prefer to receive the multicast data in the first state. A terminal device in one of the different multicast sessions includes the first terminal device and another terminal device that may exist. In other words, for different multicast sessions in a multicast and broadcast service session list (MBS session list), the different multicast sessions may correspond to different multicast and broadcast service session identifiers (MBS session IDs). The first device may send the second information, and respectively indicate, by using a plurality of pieces of information in the second information, that one or more terminal devices in multicast sessions corresponding to different multicast and broadcast service session identifiers prefer to receive multicast data in the first state. In addition, when the network device includes the core network device and the access network device, after the first device sends the second information including the plurality of pieces of information to the core network device, the core network device may send, to the access network device, parts corresponding to several multicast sessions in the plurality of pieces of information, or the core network device may send all of the plurality of pieces of information to the access network device. This is not limited herein.

In a possible implementation, the second information further indicates another terminal device in a multicast group to which the first terminal device belongs to receive first multicast data in the first state. Specifically, the second information further indicates the another terminal device in the multicast group to which the first terminal device belongs to receive the first multicast data in the first state, so that a preference for the first state in which the terminal devices included in the multicast group receive the multicast data can be set in the foregoing solution, to reduce overheads.

In a possible implementation, the multicast data is multicast data of the first multicast session, and that the first device sends the second information to the network device includes: The first device sends the second information to the network device when at least one of the following is met:
Case A: a session identifier of the first multicast session has been determined, and the first multicast session has not been created;
Case B: the first multicast session has been created, and the first terminal device has not joined the first multicast session;
Case C: the first multicast session has been created, and the first terminal device has joined the first multicast session; and
Case D: the first multicast session has been created, the first terminal device has joined the first multicast session, and an association between the first multicast session and the group has been sent to the first terminal device.

Specifically, the multicast data of the first terminal device may be multicast data of a multicast session (for example, the first multicast session), and the first device may trigger sending of the second information based on a plurality of cases of the first multicast session, to improve flexibility of implementing the solution.

Optionally, for the first device, when the first device receives the session identifier of the first multicast session from the network device (for example, the core network device), the first device determines the session identifier of the first multicast session. The session identifier may be a multicast and broadcast service session identifier (MBS session ID), or may have another name. This is not limited herein. For example, this receiving process may be a step in an MBS session ID allocation procedure performed by the first device and the core network device through interaction. The first device sends an MBS session ID request to the core network device, and the core network device allocates the MBS session ID and returns the MBS session ID to the first device, so that the first device can determine the MBS session ID of the first multicast session.

Optionally, for the first device, after the first device sends, to the network device (for example, the core network device), a response message indicating that the first multicast session has been successfully established, the first device determines that the first multicast session has been created. The response message may be a response message indicating that a multicast and broadcast service (multicast and broadcast service, MBS) assistance information session is successfully established. Correspondingly, for the first device, before sending the response message, the first device may determine that the first multicast session has not been created.

Optionally, for the first device, when the first device receives indication information from the network device (for example, the core network device), the first device may determine that the first terminal device has joined the first multicast session. The indication information indicates that the first terminal device and the network device have performed an MBS session join procedure. Correspondingly, before receiving the indication information, the first device may determine that the first terminal device has not joined the first multicast session.

It should be noted that, in step S701, when the capability information and/or the preference information (that is, the foregoing information A and/or information B) included in the first information are/is from the first terminal device, in Case A, the first terminal device reports the capability information and/or the preference information to the first device once, and the capability information and/or the preference information may be at a per-user equipment (per-UE) granularity, so that a signaling waste caused by a plurality of times of reporting can be avoided. In Case B and Case C, after the first multicast session is established, the first terminal device may report the capability information and/or the preference information to the first device one or more times, and the capability information and/or the preference information may be at a per-multicast session (for example, multicast and broadcast service session (per-MBS session)) granularity or a multicast group (group) granularity. This information granularity is more refined, and a server setting is more accurate. In Case D, a call of a group to which the first terminal device belongs has been established, and the first device determines to perform transmission of the group call on the first multicast session. In this case, the first device sends, to a member (for example, the first terminal device and another terminal device that may exist) in the group, a message indicating an association between the group or the group call and the first multicast session (where for example, the message may include a MapGroupToSessionStream (MapGroupToSessionStream) message). In this way, the group member knows that group information (including data such as signaling and media (media) of the group call) can be received on the first multicast session. Then, the first device sends the second information to the network device in step S702.

Further, the method may include step S703a and step S703b, as described below.

S703a: The first device sends the multicast data to the network device.

Correspondingly, the network device receives the multicast data.

S703b: The network device sends the multicast data.

Correspondingly, the first terminal device receives the multicast data.

For example, the network device may include the core network device (for example, a UDM, a UDR, or an MB-UPF) and the access network device. After the UDM or the UDR receives the second information in step S702, the UDM network element or the UDR network element may send the second information to the access network device. In step S703a, after the MB-UPF of the core network device receives the multicast data from the first device in step S703a, the MB-UPF may send the multicast data to the access network device in step S703b. When the access network device receives multicast data of a multicast group in step S703a, the access network device may schedule, in step S703b, a part of terminal devices in the multicast group to receive the multicast data in the RRC connected state, or the access network device may schedule, in step S703b, the other part of terminal devices in the multicast group to receive the multicast data in the RRC inactive state (for example, switch from the connected state to the inactive state). A scheduling basis of the access network device may include the second information in step S702, so that the first terminal device in the multicast group can receive the multicast data based on the preferred first state that is indicated by the second information.

Optionally, the scheduling basis of the access network device may further include other information, for example, a current load level of the network device, received quality of the terminal device, and a capability of the terminal device.

Based on the solution shown in FIG. 7, after the first device determines, based on the first information, that the first terminal device prefers to receive the multicast data in the first state, the first device sends, to the network device, the second information indicating that the first terminal device prefers to receive the multicast data in the first state, where the first state includes the RRC connected state or the RRC inactive state. The terminal device may be in different connection states, and in the different connection states (for example, the RRC connected state or the RRC inactive state), the terminal device may receive the multicast data in different processing manners. Therefore, appropriately setting a connection state for the terminal device to receive the multicast data can increase a quantity of users served by a multicast session, and also increase a quantity of multicast session users that can be served in a single cell. In the foregoing solution, the first device can determine the second information based on the first information, and send the second information to the network device, so that the network device can use the second information as one of bases for scheduling the first terminal device to receive the multicast data, and the network device can schedule the first terminal device to receive the multicast data in the first state (for example, an implementation process of step S703a and step S703b), to increase a success rate of the first terminal device in receiving the multicast data.

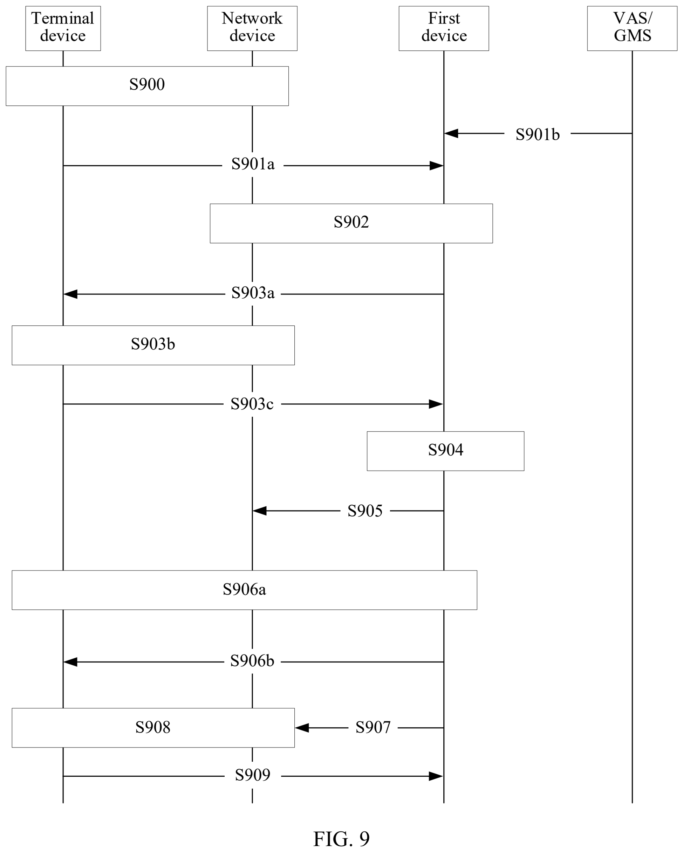

In the solution shown in FIG. 7, it can be learned from the descriptions of Case A to Case C that, when the capability information and/or the preference information (that is, the foregoing information A and/or information B) are/is included in the first information, the first device may obtain the capability information and/or the preference information on different occasions. The following separately provides example descriptions by using embodiments shown in FIG. 8 and FIG. 9.

FIG. 8 shows an application example of the communication method shown in FIG. 7, including the following steps.

It should be noted that, in an implementation shown in FIG. 8, step S803 is an implementation example of step S701, step S804 is an implementation example of step S702, step S808 is an implementation example of step S703a, step S809 is an implementation example of step S703b, and other steps in FIG. 8 are optional steps.

S800: A terminal device establishes a PDU session with a network device.

S801a: The terminal device sends capability information and/or preference information to a first device via the network device.

For the capability information and/or the preference information, refer to the foregoing information A and/or information B. Details are not described again.

For example, in step S801a, a client (an MC service client/NRM client) deployed on a first terminal device sends the capability information and/or the preference information to the first device.

For example, the client may obtain, from a modem of the first terminal device, capability information of receiving MBS data in an RRC inactive state by the first terminal device.

For another example, the client may determine, based on an operating system version number or a modem version number, that the first terminal device supports receiving the MBS data in the RRC inactive state.

For another example, the client may obtain, through a human-computer interaction interface, preference information of a user holding the first terminal device for receiving the MBS data (for example, whether the user frequently speaks and frequently sends uplink data).

Optionally, the client may further directly report the preference information or further translate the preference information into: The connected state is preferred to be kept to receive MBS session data, and the data is reported to the first device.

In addition, the client (for example, the MC service client/NRM client) deployed on the first terminal device may send the information to the first device in a registration request message. For example, when the client deployed on the first terminal device is the MC client, the registration request message may be an MC service registration/emergency service registration request message. When the client deployed on the first terminal device is the NRM client, the registration request message may be an NRM registration request message. Optionally, the message may be executed only once during login of the client. Optionally, when the client logs in to the first device again after exiting a system or after the client is powered off, the message is executed again.

S801b: A VAS/GMS sends the capability information and/or the preference information to the first device.

For example, when the client deployed on the first terminal device is the NRM client, and the NRM server is deployed on the first device, the NRM server may further obtain, from the VAS or the GMS, capability information of receiving the MBS session data in the RRC inactive state by the first terminal device/user, or preference information of receiving the MBS data (preference of keeping in the connected state to receive the MBS session data) by the first terminal device/user, receive capability information of receiving the MBS session data in the RRC inactive state by all terminal devices/users in a group, or receive information about a list of first terminal devices/users/clients preferring to receive the MBS data in the connected state.

S802: The first device receives an identifier of a multicast session from the network device.

A member of the multicast session may include the first terminal device.

For example, the first device interacts with the network device, performs an MBS session ID allocation procedure, and obtains one or more MBS session IDs (including ID 1, ..., and ID n, where n is an integer greater than 1) used to create an MBS session in the future. Optionally, each MBS session ID may correspond to one MBS service area (service area).

S803: The first device determines, based on first information, that the first terminal device prefers to receive multicast data in a first state.

For example, the first device determines to use MBS session ID 1 for group X, and determines that the first terminal device (belonging to group X) is inclined to/prefers to use (keep in) the connected state to receive multicast data for session data corresponding to MBS session ID 1.

The first device determines, based on one or more of the following information, that the first terminal device is inclined to/prefers to keep in (or switch to) the connected state to receive the multicast data: an RRC inactive multicast receiving capability/preference of the first terminal device (for example, whether the first terminal device has an RRC inactive receiving capability), a role (for example, a dispatcher, a commander, or a calling user of a group call) of the first terminal device in the group, location information of the first terminal device (for example, a location of a terminal device whose distance from an occurrence location of an incident (incident) is less than a threshold), a quantity of group calls that the first terminal device joins (where for example, a quantity of multicast groups that the first terminal device joins or a quantity of multicast sessions that the first terminal device has joined is greater than a threshold), and MBS received quality and/or an MBS received quality level (Level) reported in an MBS listening status report.

It should be noted that, in step S803, the first device may determine, at a per-multicast group granularity or a per-terminal device granularity, that the first terminal device prefers to receive the multicast data in the first state. For example, when a plurality of groups to which a terminal device belongs are mapped to different MBS session IDs, the first device determines a multicast receiving preference for a multicast session corresponding to each of the plurality of MBS session IDs of the terminal device. Specifically, the first device may set multicast receiving capability preferences of the terminal device for a plurality of MBS session IDs to be the same (for example, preferring to receive the multicast data in the connected state).

In an example, the first device may determine, in the following manners, whether an MBS receiving preference of a terminal device is to keep in the connected state for receiving.
(1) Determining is performed based on capability information of receiving the multicast data in the RRC inactive state by the first terminal device in the group. For example, a user that does not support receiving the MBS data in the multicast RRC inactive state is set to keep in the connected state to receive the MBS data.
(2) Determining is performed based on the role of the first terminal device in the group that may be a role of frequently sending uplink data, for example, the commander or the dispatcher, and the first terminal device is set to keep in the connected state to receive the MBS data.
(3) Determining is performed based on a location of the first terminal device. For example, a user close to an incident is set to keep in the connected state to receive the MBS data. The first device may obtain the location information of the first terminal device from the first terminal device, or may obtain the location information of the first terminal device from another first device, for example, a location management server or a VAL server.
(4) Determining is performed based on a quantity of group calls that the first terminal device participates in (at the same time), and when the quantity is large or exceeds a specific threshold, the first terminal device is set to keep in the connected state to receive the MBS data. Specifically, in this case, a function of an MC service server is to participate in the first device (participating UE, a participating function defined in 3GPP 23.379 and 24.379). This step may be implemented through statistics collection after step S807. When the client deployed on the first terminal device is the NRM client, the NRM server deployed on the first device may obtain, from the VAL server, the quantity of group calls that the first terminal device participates in.
(5) Determining is performed based on a quantity of MBS sessions that the first terminal device participates in (at the same time), and when the quantity is large or exceeds a specific threshold, the first terminal device is set to keep in the connected state to receive the MBS data. For the plurality of MBS session IDs, the first terminal device may be set to keep in the connected state to receive the MBS data. Specifically, in this case, a function of the MC service server is to participate in the first device (participating UE, a participating function defined in 3GPP 23.379 and 24.379). This statistical information may be implemented through statistics collection after step S806c.
(6) Determining is performed based on received quality or a received quality level (level) reported by the first terminal device for the MBS session ID, and when the received quality and/or the received quality level are/is lower than a predetermined threshold, the first terminal device is set to keep in the connected state to receive the MBS data.
(7) When the first device is the NRM server, the NRM server may further obtain, from the VAL server, a list (denoted as a UE list) of terminal devices that keep in the connected state to receive multicast session data per service. The NRM server may aggregate, with reference to UE lists sent by a plurality of VAL servers, cases in which the first terminal device keeps in the connected state for receiving in the MBS session, to determine whether the first terminal device keeps in the connected state to receive the MBS session data. In this case, the UE list sent by the VAL server to the NRM server may indicate a list of UEs whose service model is frequent uplink, and the NRM server determines, based on the information, that the first terminal device prefers to keep in the connected state for receiving. In other words, the NRM server may translate a service requirement into a network requirement for information provided by the VAL.

Specifically, in step S803, refer to one or more of information in (1) to (7), and a weight and/or a priority may be further assigned to each piece of information, and determining is performed with reference to the weight and/or the priority.

S804: The first device sends second information to the network device.

For example, the network device may include an NEF or a UDM. In other words, the first device may send the second information via the NEF or the UDM. The second information may be MBS assistance information of the first terminal device, and the information includes information indicating that the first terminal device prefers to keep in the connected state to receive multicast MBS (multicast MBS) data.

It should be understood that an MBS refers to a multicast and broadcast service, and a multicast MBS may refer to a multicast and broadcast service of a multicast type (type). Correspondingly, the MBS may further include a multicast and broadcast service of a broadcast type, and the multicast and broadcast service of the broadcast type may be denoted as a broadcast MBS.

S805: The first device creates a multicast session.

For example, the first device initiates a multicast MBS session establishment procedure to a 5GC by using MBS session ID 1, to successfully establish an MBS session.

S806a: The first device sends an announcement (announcement) to the first terminal device via the network device.

For example, the first device sends an MBS service/session announcement message to the client, where the message is used to notify the client of multicast MBS session information, which includes MBS session ID 1, frequency information, MBS service area information, and the like.

S806b: The first terminal device joins the multicast session.

For example, the first terminal device joins a multicast MBS session indicated by MBS session ID 1. In this case, the MBS assistance information per first terminal device is sent to a RAN node.

S806c: The first terminal device sends a message to the first device via the network device, where the message indicates that the first terminal device successfully joins the multicast session.

For example, the client sends, to the first device, a report message indicating that the first terminal device successfully joins the multicast MBS session. The client further sends received quality report information of the MBS session (by using an MBS session listening status report) to the first device for reporting, where the information indicates that the first terminal device can receive quality information or a level (level) of the MBS session. The first terminal device may obtain the quality information or the level (level) of the MBS session based on information such as a broadcast information reference signal and a media packet loss rate.

S807a: The first terminal device and the first device determine that the multicast session has been created.

S807b: The first device sends a MapGroupToSessionStream (MapGroupToSessionStream) message to the first terminal device, where the information is used to notify the first terminal device to receive media data of multicast session X (group X) in the MBS session indicated by MBS session ID 1.

For example, the multicast session is successfully established between the MC service client(s) deployed on the first terminal device and the MC service server deployed on the first device, and a media plane is successfully established. In addition, when the client deployed on the first terminal device and the server deployed on the first device are respectively the NRM client and the NRM server, this step may be performed between a service application layer client (vertical application layer client, VAL client) and a service application layer server (vertical application layer server, VAL server). The VAL client is configured to implement a service application client function on the first terminal device. It may be considered that the VAL client is one of MC service clients. The VAL client may be replaced with a media client, a vehicle-to-everything (vehicle-to-everything, V2X) application client, or the like. Then, in step S807b, the first device sends the MapGroupToSessionStream message to the first terminal device, where the information is used to notify the first terminal device to receive the media data of group X in the MBS session indicated by MBS session ID 1.

S808: The first device sends the multicast data to the network device.

For example, the MC service server may send downlink media data (where the downlink media data is an example of the multicast data) to the network device. When the NRM server is deployed on the first device, the VAL server sends the downlink media data to the network device without using the NRM server.

S809: The network device sends the multicast data to the first terminal device.

For example, after receiving the MBS session data, an access network device in the network device determines, based on the MBS assistance information, a multicast receiving capability of the first terminal device, received quality information of the first terminal device, and the like, to keep the first terminal device in the connected state to receive the multicast MBS data, and indicates another terminal device to receive the multicast MBS data in the RRC inactive state.

Step S810: The first terminal device sends one or more floor request messages.

For example, subsequently, the MC service server may receive a floor request floor request sent by the MC service client, where the floor request message is used to request to send uplink data. The MC service server may collect statistics on a total quantity/frequency of floor requests sent by the first terminal device, determine that the first terminal device frequently sends the uplink data, and set the first terminal device to keep in the connected state to receive the multicast MBS data. When the client deployed on the first terminal device and the server deployed on the first device are respectively the NRM client and the NRM server, the VAL server may determine, based on a service model of the first terminal device, for example, frequent uplink data sending, to set the first terminal device to receive broadcast data in the connected state. The NRM server may change subscription data of the first terminal device, and set the first terminal device to prefer to receive the MBS data in the connected state. For a detailed example, refer to the example in (7) in step 3.

Optionally, the first device may move step S805 forward to replace step S802, without including any MBS session ID. In this case, new MBS session ID 1 is obtained from the MBS session established in step S805.

Optionally, step S807a and step S807b may alternatively be performed before step S802. In this case, the first terminal device first receives media data through unicast, and then receives group data through multicast after step S807b, for example. This corresponds to the manners described in (4) and (7) in step S803.

According to the solution of the embodiment shown in FIG. 8, the first device can appropriately select, with reference to an actual service status, for example, a large quantity of group service members, a capability of the first terminal device, a data transmission mode of the first terminal device, the location of the first terminal device, and the received quality of the first terminal device, first terminal devices that prefer to keep in the connected state for receiving. A result obtained by such a setting operation makes a setting of the first terminal device more accurate, and avoids a waste of precious transmission resources of a system that is caused by setting an inappropriate/unnecessary first terminal device to be in the connected state for receiving. Through such a setting operation, system resources can be fully used, so that overall service experience and user experience of a single first terminal device are optimal.

In addition, in some implementations, a preferred receiving capability of the first terminal device is chosen to be set at appropriate time/actually, to more accurately set a first terminal device that needs to receive the multicast data in the connected state.

In addition, in some implementations, the first terminal device may report the RRC receiving capability or the preference information of the first terminal device to the first device once, and the RRC receiving capability or the preference information is reported at a per-terminal device granularity. This can avoid a signaling waste caused by a plurality of times of reporting.

FIG. 9 shows another application example of the communication method shown in FIG. 7, including the following steps.

It should be noted that, in an implementation shown in FIG. 9, step S904 is an implementation example of step S701, step S905 is an implementation example of step S702, step S909 is an implementation example of step S703a, step S909 is an implementation example of step S703b, and other steps in FIG. 9 are optional steps.

S900: A terminal device establishes a PDU session with a network device.

S901a: The terminal device sends a registration message to a first device via the network device.

S901b: A VAS/GMS sends capability information and/or preference information to the first device.

For the capability information and/or the preference information, refer to the foregoing descriptions of information A and/or information B. Details are not described herein again.

S902: The first device creates a multicast session.

S903a: The first device sends an announcement (announcement) to the first terminal device via the network device.

S903b: The first terminal device joins the multicast session.

S903c: The first terminal device sends a message to the first device via the network device, where the message indicates that the first terminal device successfully joins the multicast session.

Optionally, in step S903c, the message sent by the first terminal device may carry the capability information and/or the preference information (that is, the foregoing information A and/or information B).

It should be noted that, different from the embodiment shown in FIG. 8, a client deployed on the first terminal device includes the capability information and/or the preference information in a report message indicating that the first terminal device successfully joins the multicast session. Alternatively, the capability information and/or the preference information are/is reported in an MBS session listening status report message.

S904: The first device determines, based on first information, that the first terminal device prefers to receive multicast data in a first state.

S905: The first device sends second information to the network device.

For an implementation process in which the first device sends the second information to the network device, refer to the foregoing descriptions. Details are not described herein again.

S906a: The first terminal device and the first device determine that the multicast session has been created.

S906b: The first device sends a MapGroupToSessionStream message to the first terminal device, where the information is used to notify the first terminal device to receive media data of group X in an MBS session indicated by MBS session ID 1.

S907: The first device sends the multicast data to the network device.

S908: The network device sends the multicast data to the first terminal device.

S909: The first terminal device sends one or more floor request messages.

It should be noted that, for the steps shown in FIG. 9, refer to the implementation processes shown in FIG. 8. Details are not described herein again.

According to the solution of the embodiment shown in FIG. 9, the first device can appropriately select, with reference to an actual service status, for example, a large quantity of group service members, a capability of the first terminal device, a data transmission mode of the first terminal device, a location of the first terminal device, and received quality of the first terminal device, first terminal devices that prefer to keep in a connected state for receiving. A result obtained by such a setting operation makes a setting of the first terminal device more accurate, and avoids a waste of precious transmission resources of a system that is caused by setting an inappropriate/unnecessary first terminal device to be in the connected state for receiving. Through such a setting operation, system resources can be fully used, so that overall service experience and user experience of a single first terminal device are optimal.

In addition, in some implementations, the first terminal device reports the capability information and/or the preference information to the first device after the MBS session is established. The capability information and/or the preference information may be reported a plurality of times at a per-multicast session granularity or a per-multicast group granularity. The granularity of the capability information and/or the preference information is more refined, so that the first device can set the first state of the first terminal device more accurately.

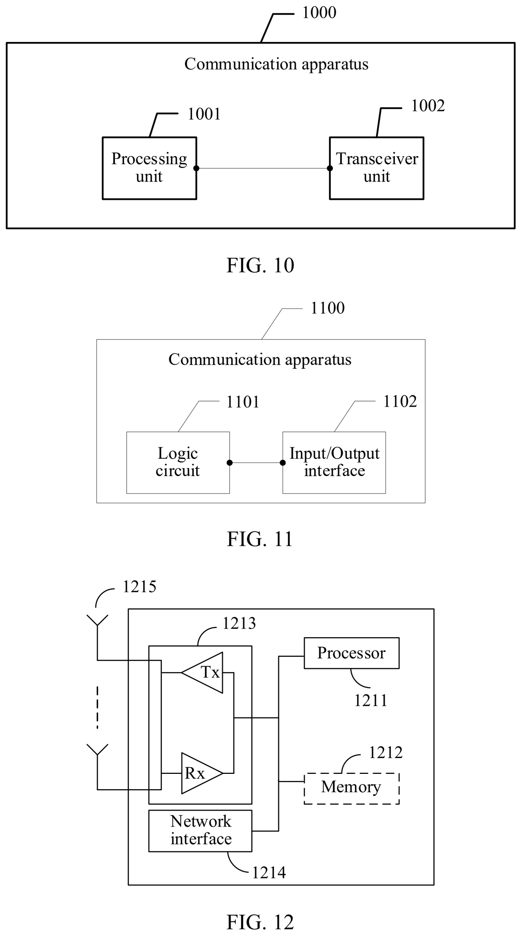

Refer to FIG. 10. An embodiment of this application provides a communication apparatus 1000. The communication apparatus 1000 can implement functions of the first device, the first terminal device, the network device, and the like in the foregoing method embodiments, and therefore can also achieve beneficial effects of the foregoing method embodiments. Specifically, the communication apparatus 1000 may be the first device, the first terminal device, or the network device, or may be an integrated circuit, an element, or the like, for example, a chip, in the first device, the first terminal device, or the network device. In the following embodiments, an example in which the communication apparatus 1000 is the first device, the first terminal device, or the network device is used for description.

In a possible implementation, when the apparatus 1000 is configured to perform the method performed by the first device in any one of the foregoing embodiments, the apparatus 1000 includes a processing unit 1001 and a transceiver unit 1002. The processing unit 1001 is configured to determine, based on first information, that the first terminal device prefers to receive multicast data in a first state, where the first state includes a radio resource control RRC connected state or an RRC inactive state. The transceiver unit 1002 is configured to send second information to the network device, where the second information indicates that the first terminal device prefers to receive the multicast data in the first state.

In a possible implementation, when the apparatus 1000 is configured to perform the method performed by the first terminal device in any one of the foregoing embodiments, the apparatus 1000 includes a processing unit 1001 and a transceiver unit 1002. The processing unit 1001 is configured to determine capability information and/or preference information, where the capability information indicates that the first terminal device supports receiving multicast data in a first state, and the preference information indicates that the first terminal device prefers to receive the multicast data in the first state, where the first state includes a radio resource control RRC connected state or an RRC inactive state. The transceiver unit 1002 is configured to send the capability information and/or the preference information.

In a possible implementation, when the apparatus 1000 is configured to perform the method performed by the network device in any one of the foregoing embodiments, the apparatus 1000 includes a processing unit 1001 and a transceiver unit 1002. The transceiver unit 1002 is configured to receive second information. The processing unit 1001 is configured to determine, based on the second information, that the first terminal device prefers to receive multicast data in a first state, where the first state includes a radio resource control RRC connected state or an RRC inactive state. The transceiver unit 1002 is further configured to send the multicast data to the first terminal device based on the second information.

It should be noted that for details of content such as an information execution process of the unit of the communication apparatus 1000, refer to descriptions in the foregoing method embodiments of this application. Details are not described herein again.

FIG. 11 is another diagram of a structure of a communication apparatus 1100 according to this application. The communication apparatus 1100 includes at least an input/output interface 1102. The communication apparatus 1100 may be a chip or an integrated circuit.

Optionally, the communication apparatus further includes a logic circuit 1101.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

Optionally, the logic circuit 1101 is configured to determine, based on first information, that a first terminal device prefers to receive multicast data in a first state, where the first state includes a radio resource control RRC connected state or an RRC inactive state. The input/output interface 1102 is configured to send second information to a network device, where the second information indicates that the first terminal device prefers to receive the multicast data in the first state. The logic circuit 1101 and the input/output interface 1102 may further perform other steps performed by the first device in any one of the foregoing embodiments, and achieve corresponding beneficial effects. Details are not described herein again.

Optionally, the logic circuit 1101 is configured to determine capability information and/or preference information, where the capability information indicates that a first terminal device supports receiving multicast data in a first state, the preference information indicates that the first terminal device prefers to receive the multicast data in the first state, where the first state includes a radio resource control RRC connected state or an RRC inactive state. The input/output interface 1102 is configured to send the capability information and/or the preference information. The logic circuit 1101 and the input/output interface 1102 may further perform other steps performed by the first terminal device in any one of the foregoing embodiments, and achieve corresponding beneficial effects. Details are not described herein again.

Optionally, the input/output interface 1102 is configured to receive second information. The logic circuit 1101 is configured to determine a user plane unit. The input/output interface 1102 is configured to determine, based on the second information, that a first terminal device prefers to receive multicast data in a first state, where the first state includes a radio resource control RRC connected state or an RRC inactive state. The input/output interface 1102 is further configured to send the multicast data to the first terminal device based on the second information. The logic circuit 1101 and the input/output interface 1102 may further perform other steps performed by the network device in any one of the foregoing embodiments, and achieve corresponding beneficial effects. Details are not described herein again.

In a possible implementation, the processing unit 1001 shown in FIG. 10 may be the logic circuit 1101 in FIG. 11.

Optionally, the logic circuit 1101 may be a processing apparatus, and some or all of functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field programmable gate arrays (field programmable gate arrays, FPGAs), application-specific integrated circuits (application-specific integrated circuits, ASICs), systems on chips (systems on chip, SoCs), central processing units (central processing units, CPUs), network processors (network processors, NPs), digital signal processing circuits (digital signal processors, DSPs), micro controller units (micro controller units, MCUs), programmable logic devices (programmable logic devices, PLDs), or other integrated chips, or any combination of the foregoing chips or processors.

FIG. 12 is a diagram of a structure of the communication apparatus in the foregoing embodiments according to an embodiment of this application. The communication apparatus 1200 may be specifically the first terminal device, the first device, or the network device in the foregoing method embodiments, or may be a chip or a system on chip in the first terminal device, the first device, or the network device. For a structure of the communication apparatus, refer to the structure shown in FIG. 12.

The communication apparatus 1200 includes at least one processor 1211. Further, the communication apparatus may further include at least one memory 1212.

The memory is mainly configured to store a software program and data. The memory 1212 may exist independently, and is connected to the processor 1211.

Optionally, the memory 1212 may alternatively be integrated with the processor 1211. For example, the memory 1212 and the processor 1211 are integrated into one chip. The memory 1212 is configured to store program code for performing the solutions in embodiments of this application.

The processor 1211 is configured to read the program code in the memory 1212, to implement related functions of the first terminal device, the first device, or the network device in the foregoing method embodiments.

FIG. 12 shows only one memory and one processor. In an actual first terminal device, first device, or network device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

An embodiment of this application further provides a computer-readable storage medium. The storage medium is configured to store one or more computer-executable instructions. When the computer-executable instructions are executed by a processor, the processor performs the method according to the possible implementations of the first device, the first terminal device, or the network device in the foregoing embodiments.

An embodiment of this application further provides a computer program product (also referred to as a computer program). When the computer program product is executed by a processor, the processor performs the method according to the possible implementations of the first device, the first terminal device, or the network device.

An embodiment of this application further provides a chip system. The chip system includes at least one processor, configured to support a communication apparatus in implementing the functions in the foregoing possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first device, the first terminal device, or the network device in the foregoing method embodiments.

An embodiment of this application further provides a communication system. An architecture of the network system includes the first device and the network device in any one of the foregoing embodiments. Further, the communication system may include the first terminal device in any one of the foregoing embodiments.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, for example, a USB flash drive, a portable hard drive, a read-only memory (ROM, Read-Only Memory), a random access memory (RAM, Random Access Memory), a magnetic disk, or an optical disc.

## Claims

1. A communication method, comprising:
determining, based on first information, that a first terminal device prefers to receive multicast data in a first state, wherein the first state comprises a radio resource control RRC connected state or an RRC inactive state; and
sending second information to a network device, wherein the second information indicates that the first terminal device prefers to receive the multicast data in the first state.

2. The method according to claim 1, wherein the first information comprises at least one of the following:
capability information of the first terminal device, wherein the capability information indicates that the first terminal device supports receiving the multicast data in the RRC inactive state;
preference information of the first terminal device, wherein the preference information indicates that the first terminal device prefers to receive the multicast data in the first state;
a multicast role of the first terminal device in a group corresponding to the multicast data;
a location of the first terminal device;
a quantity of groups that the first terminal device joins;
a quantity of multicast sessions that the first terminal device has joined;
received quality information of the first terminal device for a first multicast session, wherein the first multicast session is used for transmission of the multicast data;
a service communication model of the first terminal device; and
one or more floor request messages from the first terminal device.

3. The method according to claim 2, wherein the first information comprises the capability information of the first terminal device, and the determining, based on the first information, that the first terminal device prefers to receive the multicast data in the first state comprises:
when the capability information indicates that the first terminal device supports receiving the multicast data in the RRC inactive state, determining that the first terminal device prefers to receive the multicast data in the RRC inactive state;
or
when the capability information indicates that the first terminal device does not support receiving the multicast data in the RRC inactive state, determining that the first terminal device prefers to receive the multicast data in the RRC connected state.

4. The method according to claim 2 or 3, wherein the first information comprises the preference information of the first terminal device, and the determining, based on the first information, that the first terminal device prefers to receive the multicast data in the first state comprises:
when the preference information indicates that the first terminal device prefers to receive the multicast data in the RRC connected state, determining that the first terminal device prefers to receive the multicast data in the RRC connected state;
or
when the preference information indicates that the first terminal device prefers to receive the multicast data in the RRC inactive state, determining that the first terminal device prefers to receive the multicast data in the RRC inactive state.

5. The method according to any one of claims 2 to 4, wherein the first information comprises the service communication model of the first terminal device, and the determining, based on the first information, that the first terminal device prefers to receive the multicast data in the first state comprises:
when the service communication model of the first terminal device indicates frequent uplink, determining that the first terminal device prefers to receive the multicast data in the RRC connected state;
or
when the service communication model of the first terminal device indicates downlink only, determining that the first terminal device prefers to receive the multicast data in the RRC inactive state.

6. The method according to any one of claims 2 to 5, wherein the first information comprises the one or more floor request messages from the first terminal device, and the determining, based on the first information, that the first terminal device prefers to receive the multicast data in the first state comprises:
when a total quantity of the one or more floor request messages exceeds a first threshold and/or frequency of the one or more floor request messages exceeds a second threshold, determining that the first terminal device prefers to receive the multicast data in the RRC connected state.

7. The method according to any one of claims 2 to 6, wherein the first information further comprises priority information corresponding to at least one of the information.

8. The method according to any one of claims 1 to 7, wherein the multicast data is multicast data of the first multicast session.

9. The method according to any one of claims 2 to 8, wherein the capability information and the preference information are from a mission critical service client MC service client, and the MC service client is deployed on the first terminal device.

10. The method according to claim 9, wherein the method further comprises:
receiving a first message from the MC service client, wherein the first message carries the capability information and/or the preference information; and
the first message is a mission critical service registration message, an emergency service registration request message, a user equipment UE session join notification message, or a multicast and broadcast service session listening status report message.

11. The method according to any one of claims 2 to 8, wherein the capability information and/or the preference information are/is from a network resource management client NRM client, a service application server VAS, or a group management server GMS, and the NRM client is deployed on the first terminal device.

12. The method according to claim 11, wherein the method further comprises:
receiving a second message from the NRM client, wherein the second message carries the capability information and/or the preference information, and the second message is an NRM registration request message, an emergency service registration request message, a UE session join notification message, or a multicast and broadcast service session listening status report message.

13. The method according to any one of claims 1 to 12, wherein the multicast data is multicast data of the first multicast session, and the sending the second information to the network device comprises:
sending the second information to the network device when at least one of the following is met:
a session identifier of the first multicast session has been determined, and the first multicast session has not been created;
the first multicast session has been created, and the first terminal device has not joined the first multicast session;
the first multicast session has been created, and the first terminal device has joined the first multicast session; and
the first multicast session has been created, the first terminal device has joined the first multicast session, and an association between the first multicast session and the group has been sent to the first terminal device.

14. The method according to any one of claims 1 to 13, wherein the second information further indicates another terminal device in a multicast group to which the first terminal device belongs to receive first multicast data in the first state.

15. The method according to any one of claims 1 to 14, wherein the second information is carried in multicast and broadcast service assistance information MBS assistance information.

16. A communication method, comprising:
determining capability information and/or preference information, wherein the capability information indicates that a first terminal device supports receiving multicast data in a first state, and the preference information indicates that the first terminal device prefers to receive the multicast data in the first state, wherein the first state comprises a radio resource control RRC connected state or an RRC inactive state; and
sending the capability information and/or the preference information.

17. The method according to claim 16, wherein the capability information and/or the preference information are/is carried in a mission critical service registration message, an emergency service registration request message, a UE session join notification message, or a multicast and broadcast service session listening status report message.

18. A communication apparatus, comprising a transceiver unit and a processing unit, wherein the transceiver unit and the processing unit are configured to perform the method according to any one of claims 1 to 17.

19. A communication apparatus, comprising at least one processor, wherein the at least one processor is coupled to a memory, and the at least one processor is configured to perform the method according to any one of claims 1 to 17.

20. A readable storage medium, wherein the storage medium stores a computer program or instructions, and when the computer program or the instructions are executed by a communication apparatus, the method according to any one of claims 1 to 17 is implemented.

21. A communication system, comprising a first communication apparatus and a network device, wherein
the first communication apparatus is configured to perform the method according to any one of claims 1 to 15; and
the network device is configured to receive the second information.

22. The communication system according to claim 21, wherein the communication system further comprises a second communication apparatus, and the second communication apparatus is configured to perform the method according to claim 16 or 17.
